(19)

**Europäisches Patentamt**
**European Patent Office**
**Office européen des brevets**

(11)  **EP 4 693 691 A1**

(12) **EUROPEAN PATENT APPLICATION**
published in accordance with Art. 153(4) EPC

(43) Date of publication:
**11.02.2026 Bulletin 2026/07**

(21) Application number: **24780172.3**

(22) Date of filing: **25.03.2024**

(51) International Patent Classification (IPC):
*H01M 50/489* (2021.01)   *H01G 11/06* (2013.01)
*H01G 11/52* (2013.01)    *H01M 4/58* (2010.01)
*H01M 50/403* (2021.01)   *H01M 50/417* (2021.01)
*H01M 50/449* (2021.01)   *H01M 50/463* (2021.01)
*H01M 50/491* (2021.01)   *H01M 50/494* (2021.01)

(52) Cooperative Patent Classification (CPC):
**H01G 11/06; H01G 11/52; H01M 4/58;
H01M 50/403; H01M 50/417; H01M 50/449;
H01M 50/463; H01M 50/489; H01M 50/491;
H01M 50/494;** Y02E 60/10

(86) International application number:
**PCT/JP2024/011678**

(87) International publication number:
**WO 2024/204054 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023   JP 2023053935
29.03.2023   JP 2023054037
09.08.2023   JP 2023130028**

(71) Applicant: **Asahi Kasei Kabushiki Kaisha
Tokyo 1000006 (JP)**

(72) Inventors:
• **SUGITA, Yoshiyuki
Tokyo 100-0006 (JP)**
• **SAITO, Shun
Tokyo 100-0006 (JP)**
• **MORI, Shohei
Tokyo 100-0006 (JP)**
• **UCHIDA, Kazunori
Tokyo 100-0006 (JP)**

(74) Representative: **Strehl & Partner mbB
Maximilianstrasse 54
80538 München (DE)**

(54) **SEPARATOR FOR POWER STORAGE DEVICES, AND POWER STORAGE DEVICE**

(57)   The present invention provides a separator for power storage devices, the separator having a microporous membrane in which a microporous layer (A) containing a polypropylene as a main component and a microporous layer (B) containing a polypropylene as a main component are superposed upon each other, or alternatively, at least one of the microporous layer (A) and the microporous layer (B) is contained. With respect to this separator for power storage devices, the trunk height as calculated from the analysis of an SEM image of an MD-ND cross-section of the microporous membrane is 500 nm to 1,000 nm (inclusive).

**EP 4 693 691 A1**

## Description

FIELD

The present disclosure relates to a separator for a power storage device.

BACKGROUND

Microporous membranes, particularly polyolefin-based microporous membranes, are used in various fields such as precision filtration membranes, separators for batteries, separators for capacitors, and materials for fuel cells and are particularly used as separators for power storage devices represented by lithium secondary batteries and lithium-ion secondary batteries. Lithium-ion batteries are applied to various uses, such as electric vehicles including hybrid vehicles and plug-in hybrid vehicles in addition to small-sized electronic equipment including mobile phones and notebook personal computers.

In recent years, there has been a demand for lithium-ion batteries having high energy capacity, high energy density, and excellent output characteristics, which is leading to a growing demand for separators that are thin membranes and excel in battery performance, battery reliability, and safety.

For example, PTL 1 describes a multilayer microporous thin membrane or membrane that may improve characteristics including dielectric breakdown and strength. A preferable multilayer microporous membrane includes a micro layer and one or more multilayer barriers.

Reference 2 describes a separator for a power storage device including a microporous membrane having a polyolefin as a principal component, melt tension measured at 230°C being 30 mN or less, and a melt flow rate (MFR) measured at a load of 2.16 kg and a temperature of 230°C being 0.9 g/10 min or less from the viewpoint of membrane strength and thin membrane formation. Further, PTL 3 describes providing a low-impurity film from a cellulose raw material and achieving downsizing and increased capacity of an electrolytic capacitor by use of the film as a separator.

[CITATION LIST]

[PATENT LITERATURE]

[PTL 1] International Application Publication No. WO 2018/089748
[PTL 2] International Application Publication No. WO 2020/196120
[PTL 3] International Application Publication No. WO 2013/069146

SUMMARY

[TECHNICAL PROBLEM]

An object of the present disclosure is to, in view of the aforementioned BACKGROUND section, provide a separator for a power storage device that can simultaneously achieve high permeability required for uses as a power storage device, and high puncture strength and high dielectric strength for achieving a high level of safety.

[SOLUTION TO PROBLEM]

Examples of an embodiment of the present disclosure will be listed below in Items [1] to [14].

[1] A separator for a power storage device including a microporous membrane in which a microporous layer (A) containing polypropylene as a principal component and a microporous layer (B) containing polypropylene as a principal component are laminated or at least one of the microporous layer (A) and the microporous layer (B) is included, in which
a trunk height calculated from an analysis of an SEM image of an MD-ND cross section of the microporous membrane is 500 nm or greater and 1000 nm or less.

[2] The separator for a power storage device according to Item 1, in which an area-average major axis pore diameter of the microporous layer (A) calculated from the analysis of the SEM image of the MD-ND cross section of the microporous membrane is 100 nm or greater and 280 nm or less.

[3] The separator for a power storage device according to Item 1 or 2, in which an area-average major axis pore diameter of the microporous layer (A) is smaller than an area-average major axis pore diameter of the microporous layer (B).

[4] The separator for a power storage device according to any one of Items 1 to 3, in which melt tension $Mt_A$ of the microporous layer (A) at 240°C is 10 mN or greater and 35 mN or less.

[5] The separator for a power storage device according to any one of Items 1 to 4, in which a thickness of the microporous membrane is 8 $\mu$m or greater and 20 $\mu$m or less.

[6] The separator for a power storage device according to any one of Items 1 to 5, in which a thickness of the microporous layer (A) is 5 $\mu$m or less.

[7] The separator for a power storage device according to any one of Items 1 to 6, in which a molecular weight distribution (Mw/Mn) being a value acquired by dividing a weight-average molecular weight (Mw) of polypropylene in the microporous layer (A) by a number-average molecular weight (Mn) of polypropylene in the microporous layer (A) is 6.0 or greater and 14 or less.

[8] The separator for a power storage device according to any one of Items 1 to 7, in which a ratio of one or more components with a molecular weight equal to or less than 80,000 in polypropylene in the microporous layer (A) is 10% or greater and 20% or less, and a ratio of one or more components with a molecular weight equal to or greater than 1,500,000 is 10% or greater and 20% or less.

[9] The separator for a power storage device according to any one of Items 1 to 8, in which an average flow pore diameter of the microporous layer (B) is 20 nm or greater and 25 nm or less.

[10] The separator for a power storage device according to any one of Items 1 to 9, in which an area-average major axis pore diameter of a surface of the microporous layer (B) is 140 nm or greater and 300 nm or less.

[11] The separator for a power storage device according to any one of Items 1 to 10, in which a TD thermal contraction rate of the microporous membrane at 105°C for 1 hour is 5% or less.

[12] The separator for a power storage device according to any one of Items 1 to 11, in which porosity of the microporous membrane is 40% or greater and 54% or less.

[13] The separator for a power storage device according to any one of Items 1 to 12, in which melt tension $Mt_A$ of the microporous layer (A) at 240°C and melt tension $Mt_B$ of the microporous layer (B) are different in the microporous membrane.

[14] The separator for a power storage device according to any one of Items 1 to 13, in which MD tensile strength of the microporous membrane is 1500 kgf/cm$^2$ or greater.

[ADVANTAGEOUS EFFECTS OF INVENTION]

According to the present disclosure, a separator for a power storage device that simultaneously achieves high permeability, and high puncture strength and high dielectric strength for achieving a high level of safety is provided.

DESCRIPTION OF EMBODIMENTS

<<Separator for Power Storage Device>>

A separator for a power storage device according to the present disclosure includes, as a separator substrate, a microporous membrane including a microporous layer (A) having a polyolefin as a principal component and, as desired, a microporous layer (B) having a polyolefin as a principal component. The separator substrate may further include a coating layer (also referred to as a "surface layer" or a "covering layer," and hereinafter simply referred to as a "coating layer") on the microporous layer (A) and/or the microporous layer (B). Herein, a "microporous layer" refers to each microporous layer constituting a substrate of a separator, a "separator substrate" refers to the substrate of the separator excluding an optional coating layer, and a "separator" refers to the entire separator including the optional coating layer as well.

The separator for a power storage device according to the present disclosure may include a microporous membrane in which the microporous layer (A) containing polypropylene as a principal component and the microporous layer (B) containing polypropylene as a principal component are laminated. Further, the separator for a power storage device according to the present disclosure may include a microporous membrane including at least one of the microporous layer (A) and the microporous layer (B). A microporous membrane with a single-layer structure may include the microporous layer (A) or the microporous layer (B), and is preferably formed of the microporous layer (A) or the microporous layer (B). In a microporous membrane with a multilayer structure, the microporous layer (A) and the microporous layer (B) are laminated; and preferably, the microporous layer (A) and the microporous layer (B) are in contact with each other, the microporous layer (A) and the microporous layer (B) are adjacent to each other, or the interface between the microporous layer (A) and the microporous layer (B) can be observed.

The weight-average molecular weight, the number-average molecular weight, and Mw/Mn of polyolefin according to the present disclosure are molecular weights in terms of polystyrene, the weights being acquired by gel permeation chromatography (GPC) measurement.

<Microporous Layer (A)>

The separator for a power storage device according to the present disclosure includes the microporous layer (A). The separator for a power storage device may include only one microporous layer (A) or two or more microporous layers (A). The microporous layer (A) has a polyolefin as a principal component and more preferably has polypropylene and/or polyethylene as a principal component. Consequently, excellent battery performance with an excellent porous nature can be acquired. The microporous layer (A) more preferably has polypropylene as a principal component. Consequently, excellent battery performance can be maintained even after storage at a high temperature (e.g., 130°C). Having polypropylene as "a principal component" herein refers to containing 50% by weight of polypropylene or more on the basis of the total weight of the microporous layer (A). The lower limit of the polypropylene content in the microporous layer (A) is 50% by weight or greater and preferably 55% by weight or greater, 60% by weight or greater, 70% by weight or greater, 80% by weight or greater, 90% by weight or greater, or 95% by weight or greater from the viewpoint of wettability, thin membrane formation, shutdown characteristics, and the like of the separator. For example, the upper limit of the polypropylene content in the microporous layer (A) may be, but not limited to, 60% by weight or less, 70% by weight or less, 80% by weight or less, 90% by weight or less, 95% by weight or less, 98% by weight or less, or 99% by weight or less and may also be 100% by weight.

<Material of Microporous Layer (A)>

The microporous layer (A) has a polyolefin as a principal component and more preferably has polypropylene and/or polyethylene as a principal component. Consequently, excellent battery performance with an excellent porous nature can be acquired. The microporous layer (A) more preferably has polypropylene as a principal component. Consequently, excellent battery performance can be maintained even after storage at a high temperature (e.g., 130°C). Polypropylene in the microporous layer (A) may be the same material as polypropylene in the microporous layer (B) to be described later or may be polypropylene with a different chemical structure and more specifically polypropylene differing in at least one of monomer composition, stereoregularity, molecular weight, and crystal structure. Examples of the stereoregularity of polypropylene include, but not limited to, atactic, isotactic, and syndiotactic homopolymers. Polypropylene according to the present disclosure is preferably an isotactic or syndiotactic high-crystallinity homopolymer.

Polypropylene in the microporous layer (A) is preferably a homopolymer and may be a copolymer co-polymerized with a small amount of comonomer other than propylene, such as an $\alpha$-olefin comonomer, examples of such a copolymer including a block polymer. For example, the amount of propylene structural units contained as repeating units in polypropylene may be, but not limited to, 70 mol% or greater, 80 mol% or greater, 90 mol% or greater, 95 mol% or greater, or 99 mol% or greater. For example, the amount of repeating units contained in polypropylene, the units being derived from a comonomer other than the propylene structure may be, but not limited to, 30 mol% or less, 20 mol% or less, 10 mol% or less, 5 mol% or less, or 1 mol% or less. One type of polypropylene may be singly used, or a mixture of two or more types may be used.

The weight-average molecular weight (Mw) of polypropylene in the microporous layer (A) is preferably 300,000 or greater from the viewpoint of the strength of the microporous layer and the like and the viewpoint of dielectric strength and is preferably 1,300,000 or less from the viewpoint of guaranteeing excellent membrane formability and productivity and the viewpoint of excellent air permeability. Mw of polypropylene is more preferably 500,000 or greater and 1,200,000 or less, yet more preferably 650,000 or greater and 1,100,000 or less, further more preferably 750,000 or greater and 1,000,000 or less, and particularly preferably 800,000 or greater and 1,000,000 or less.

The upper limit of a molecular weight distribution (Mw/Mn) being a value acquired by dividing the weight-average molecular weight (Mw) of polypropylene in the microporous layer (A) by the number-average molecular weight (Mn) is preferably 14 or less, more preferably 12 or less, 10 or less, or 8 or less. Setting Mw/Mn to 14 or less tends to be able to guarantee excellent membrane formability and productivity. Further, the lower limit of Mw/Mn is preferably 6.0 or greater, more preferably 6.5 or greater, and yet more preferably 7.0 or greater. As the value of Mw/Mn of polypropylene increases, the melt tension of the acquired microporous layer also tends to increase; and increasing the melt tension of the microporous layer (A) is preferable also from the viewpoint of excellent dendrite suppression and dielectric strength. Accordingly, the value of Mw/Mn of polypropylene being 6.0 or greater is preferable for controlling the melt tension of the microporous layer (A) to be high.

Polypropylene with a narrow molecular weight distribution (Mw/Mn < 6.0) acquired by conventional single-stage polymerization has a low distribution of low molecular weight components despite having a sufficient distribution of high molecular weight components, and therefore, achieving both excellent dendrite suppression performance and dielectric strength characteristics, and excellent permeability is difficult. However, polypropylene in the microporous layer (A) used in the embodiment of the present disclosure is characterized by having a wide molecular weight distribution due to, for example, multi-stage polymerization. For example, polypropylene with Mw/Mn ranging from 6.0 to 14 can be eventually manufactured by manufacturing high molecular weight components and low molecular weight components by two-stage polymerization. Polypropylene in the microporous layer (A) used in the embodiment of the present disclosure also has a wide distribution of both high molecular weight components and low molecular weight components; and a sufficiently fine pore structure and/or a small pore diameter can be provided by the low molecular weight components enhancing the porous nature and the permeability, and the high molecular weight components controlling the melt tension to be high. Accordingly, the present invention enables both excellent dendrite suppression performance and dielectric strength characteristics, and excellent permeability.

The upper limit of the ratio of components with a molecular weight equal to or less than 80,000 contained in polypropylene in the microporous layer (A) is preferably 20% or less and more preferably 18% or less, 16% or less, or 14% or less. Setting the ratio of components with a molecular weight equal to or less than 80,000 to 20% or less is preferable from the viewpoint of strength. Further, the ratio of components with a molecular weight equal to or less than 80,000 contained in polypropylene in the microporous layer (A) is preferably 10% or greater, more preferably 11% or greater, and yet more preferably 12% or greater. As the ratio of components with a molecular weight equal to or less than 80,000 in polypropylene increases, the porous nature of the acquired microporous layer is improved, and excellent permeability can be exhibited.

The upper limit of the ratio of components with a molecular weight equal to or greater than 1,500,000 contained in polypropylene in the microporous layer (A) is preferably 20% or less and more preferably 19% or less, 18% or less, or 17% or less. Setting the ratio of components with a molecular weight equal to or greater than 1,500,000 to 20% or less tends to be able to guarantee excellent membrane formability or productivity. Further, the ratio of components with a molecular weight equal to or greater than 1,500,000 contained in polypropylene in the microporous layer (A) is preferably 10% or greater, more preferably 11% or greater, and yet more preferably 12% or greater. As the ratio of components with a molecular weight equal to or greater than 1,500,000 contained in polypropylene increases, the melt tension of the acquired microporous layer tends to also increase; and increasing the melt tension of the microporous layer (A) is also preferable in dendrite suppression and dielectric strength characteristics. Accordingly, the ratio of components with a molecular weight equal to or greater than 1,500,000 contained in polypropylene being 10% or greater is preferable for controlling the melt tension of the microporous layer (A) to be high.

The density of polypropylene in the microporous layer (A) may be preferably 0.85 g/cm$^3$ or higher, such as 0.88 g/cm$^3$ or higher, 0.89 g/cm$^3$ or higher, or 0.90 g/cm$^3$ or higher. The density of polypropylene may be preferably 1.1 g/cm$^3$ or less, such as 1.0 g/cm$^3$ or less, 0.98 g/cm$^3$ or less, 0.97 g/cm$^3$ or less, 0.96 g/cm$^3$ or less, 0.95 g/cm$^3$ or less, 0.94 g/cm$^3$ or less, 0.93 g/cm$^3$ or less, or 0.92 g/cm$^3$ or less. The density of polyolefin is related to the crystallinity of polypropylene; and by setting the density of polypropylene to 0.85 g/cm$^3$ or higher, the productivity of microporous layer production is improved, which is particularly advantageous in the dry method.

The microporous layer (A) may contain another resin as long as the layer has a polyolefin as a principal component. Examples of another resin include a polyolefin other than polypropylene (also referred to as "another polyolefin") and a copolymer of polystyrene and a polyolefin. A polyolefin is a polymer containing a monomer having a carbon-carbon double bond as a repeating unit. Examples of a monomer constituting a polyolefin other than polypropylene include, but not limited to, monomers having carbon-carbon double bonds and two or four to ten carbon atoms, such as ethylene, 1-butene, 4-methyl-1-pentene, 1-hexene, and 1-octene. Examples of a polyolefin include a homopolymer, a copolymer, and a multistage polymer; and, as an example, a polyolefin may contain polyethylene. Preferable examples of a copolymer of polystyrene and a polyolefin include a styrene-(ethylene-propylene)-styrene copolymer (SEPS), a styrene-(ethylene-butene)-styrene copolymer, and a styrene-ethylene-styrene copolymer, and a styrene-(ethylene-propylene)-styrene copolymer (SEPS) is particularly preferable.

<Melt Flow Rate (MFR) of Microporous Layer (A)>

The upper limit of the melt flow rate (MFR) of the microporous layer (A) (the MFR of a single layer) is preferably 4.0 g/10 min or less and may be, for example, 3.0 g/10 min or less, 2.0 g/10 min or less, 1.5 g/10 min or less, 1.1 g/10 min or less, or 0.5 g/10 min or less from the viewpoint of acquiring a microporous layer (A) with higher strength and the viewpoint of acquiring a small pore diameter exhibiting excellent dielectric strength. For example, the lower limit of the MFR of the microporous layer (A) (the MFR of a single layer) may be, but not limited to, 0.2 g/10 min or greater, 0.25 g/10 min or greater, 0.3 g/10 min or greater, or 0.35 g/10 min or greater from the viewpoint of moldability of the microporous layer (A), and the like. The MFR of the microporous layer (A) is measured under conditions of a load of 2.16 kg and a temperature of 230°C for polypropylene and under conditions of a load of 2.16 kg and a temperature of 190°C for polyethylene.

The MFR of the microporous layer (A) being 4.0 g/10 min or less means that the molecular weight of polyolefin contained in the microporous layer (A) is to some extent high. The number of tie molecules binding crystalline materials to each other increases due to a high molecular weight of polyolefin, and therefore, a microporous layer (A) with high strength tends to be acquired, and sufficiently high melt tension can be applied, which tends to facilitate provision of a pore structure with small pore diameters exhibiting excellent dielectric strength. The MFR of the microporous layer (A) being 0.2 g/10 min or greater prevents the melt tension of the microporous layer (A) from becoming excessively high, which can guarantee excellent membrane formability and productivity.

The MFR of polypropylene in the microporous layer (A) is preferably 0.2 to 4.0 g/10 min when measured under conditions of a load of 2.16 kg and a temperature of 230°C from the viewpoint of acquiring a microporous layer (A) with high strength and high melt tension. For example, the upper limit of the MFR of polypropylene may be 4.0 g/10 min or less, 3.0 g/10 min or less, 2.0 g/10 min or less, 1.5 g/10 min or less, 1.1 g/10 min or less, or 0.5 g/10 min or less from the viewpoint of acquiring a microporous layer with higher strength. For example, the lower limit of the MFR of polypropylene may be, but not limited to, 0.2 g/10 min or greater, 0.25 g/10 min or greater, 0.3 g/10 min or greater, or 0.35 g/10 min or greater from the viewpoint of the moldability of the microporous layer (A), and the like.

<Pentad Fraction of Microporous Layer (A)>

The lower limit of the pentad fraction of polypropylene in the microporous layer (A) may be preferably 94.0% or greater, such as 95.0% or greater, 96.0% or greater, 96.5% or greater, 97.0% or greater, 97.5% or greater, 98.0% or greater, 98.5% or greater, or 99.0% or greater, from the viewpoint of acquiring a microporous layer with low air permeability. The upper limit of the pentad fraction of polypropylene may be, but not limited to, 99.9% or less, 99.8% or less, or 99.5% or less. The pentad fraction of polypropylene is measured by using $^{13}$C-nuclear magnetic resonance (NMR).

The pentad fraction of polypropylene being 94.0% or greater indicates high crystallinity of polypropylene. A separator acquired by the stretching-induced pore formation method, particularly the dry method, has pores formed by stretching an amorphous part between crystalline materials; and therefore, when the crystallinity of polypropylene is high, the porosity is improved, and the air permeability can be kept low, which enables higher battery output.

<Melt Tension of Microporous Layer (A)>

The melt tension $Mt_A$ of microporous layer (A) at 240°C is preferably 10 mN or greater and 40 mN or less. The lower limit of the melt tension $Mt_A$ is preferably 10 mN or greater, more preferably 13 mN or greater, yet more preferably 16 mN or greater, particularly preferably 20 mN or greater, and most preferably 23 mN or greater from the viewpoint of providing a sufficiently fine pore structure or a small pore diameter and exhibiting excellent dielectric strength. The upper limit of the melt tension $Mt_A$ is preferably 35 mN or less and more preferably 32 mN or less from the viewpoint of achieving excellent membrane formability and productivity, and excellent air permeability.

<Area-average Major Axis Pore Diameter of Microporous Layer (A)>

The area-average major axis pore diameter of the microporous layer (A) at an MD-ND cross section (hereinafter simply referred to as the "area-average major axis pore diameter") is preferably 100 nm or greater and 280 nm or less. Herein, "ND" refers to the thickness direction of the microporous layer, and "MD" refers to the membrane formation direction of the microporous layer. For example, the MD of a separator including a microporous layer is the longitudinal direction when the separator is in a roll. A "major axis pore diameter" refers to a pore diameter in the MD. When a microporous membrane or a separator has microporous layers with different melt tensions, a microporous layer with a smaller area-average major axis pore diameter is determined to be the microporous layer (A). By determining a microporous layer with a smaller area-average major axis pore diameter to be the microporous layer (A), a greater correlation with dielectric strength can be acquired. Further, when there are two or more microporous layers (A) and/or microporous layers (B), the area-average major axis pore diameters of the microporous layer (A) and the microporous layer (B) are compared based on the average area-average major axis pore diameter values of the respective layers. The lower limit of the area-average pore diameter of the microporous layer (A) is preferably 100 nm or greater, more preferably 120 nm or greater, yet more preferably 130 nm or greater, and particularly preferably 140 nm or greater from the viewpoint of guaranteeing excellent output in the power storage device and the viewpoint of achieving excellent air permeability. Further, the upper limit of the area-average pore diameter of the microporous layer (A) is preferably 280 nm or less, more preferably 260 nm or less, yet more preferably 240 nm or less, particularly preferably 210 nm or less, and most preferably 190 nm or less from the viewpoint of acquiring excellent dielectric strength.

The area-average major axis pore diameter can be measured by performing cross-sectional SEM observation on an MD-ND cross section of the separator and performing image analysis on the acquired image. Detailed conditions will be described in Examples. While the number-average pore diameter and the area-average pore diameter can be calculated when the average pore diameter is measured from a cross-sectional SEM image, the area-average pore diameter is herein used as the average pore diameter in order to acquire a better correlation with properties of the separator.

<Porosity of Microporous Layer (A)>

The porosity of the microporous layer (A) is preferably 20% or greater from the viewpoint of clogging avoidance in the power storage device and the viewpoint of acquiring excellent air permeability of the separator and is preferably 70% or less from the viewpoint of maintaining the strength of the separator. The porosity of the microporous layer (A) is more preferably 25% or greater and 65% or less, yet more preferably 30% or greater and 60% or less, and particularly preferably 35% or greater and 60% or less.

<Thickness of Microporous Layer (A)>

The thickness of the microporous layer (A) is preferably 5 $\mu$m or less and more preferably 4.5 $\mu$m or less from the viewpoint of energy densification in the power storage device, and the like. The lower limit of the thickness of the microporous layer (A) is preferably 1 $\mu$m or greater, such as 2 $\mu$m or greater, 3 $\mu$m or greater, or 3.5 $\mu$m or greater, from the viewpoint of strength and the like.

<Additive in Microporous Layer (A)>

The microporous layer (A) having polypropylene as a principal component may further contain an additive, such as an elastomer, a crystallization nucleating agent, an antioxidant, and/or a filler as needed, in addition to polypropylene. The amount of the additive is not particularly limited but may be, for example, 0.01% by weight or greater, 0.1% by weight or greater, or 1% by weight or greater, and 20% by weight or less, 10% by weight or less, or 7% by weight or less, on the basis of the total weight of the microporous layer (A).

<Microporous Layer (B)>

The separator for a power storage device according to the present disclosure includes the microporous layer (B) as desired. The separator for a power storage device may include only one microporous layer (B) or two or more microporous layers (B). The microporous layer (B) also has a polyolefin as a principal component and more preferably has polypropylene and/or polyethylene as a principal component. Consequently, excellent battery performance with an excellent porous nature can be acquired. The microporous layer (B) preferably has polypropylene as a principal component; and consequently, excellent battery performance can be maintained even after storage at a high temperature (e.g., 130°C). The microporous layer (B) having polypropylene as "a principal component" herein refers to containing 50% by weight of polypropylene or more on the basis of the total weight of the microporous layer (B). The lower limit of the polypropylene content in the microporous layer (B) is preferably 55% by weight or greater, 60% by weight or greater, 70% by weight or greater, 80% by weight or greater, 90% by weight or greater, or 95% by weight or greater from the viewpoint of wettability, thin membrane formation, and the like of the separator. For example, the upper limit of the polypropylene content in the microporous layer (B) may be, but not limited to, 60% by weight or less, 70% by weight or less, 80% by weight or less, 90% by weight or less, 95% by weight or less, 98% by weight or less, or 99% by weight or less and may also be 100% by weight.

<Material of Microporous Layer (B)>

The microporous layer (B) has a polyolefin as a principal component and more preferably has polypropylene and/or polyethylene as a principal component. Consequently, excellent battery performance with an excellent porous nature can be acquired. The microporous layer (B) more preferably has polypropylene as a principal component. Consequently, excellent battery performance can be maintained even after storage at a high temperature (e.g., 130°C). Polypropylene in the microporous layer (B) may be the same material as polypropylene in the microporous layer (A) or may be polypropylene with a different chemical structure, or more specifically, polypropylene differing in at least one of monomer composition, stereoregularity, molecular weight, and crystal structure. Examples of the stereoregularity of polypropylene in the microporous layer (B) include, but not limited to, atactic, isotactic, and syndiotactic homopolymers. Polypropylene according to the present disclosure is preferably an isotactic or syndiotactic high-crystallinity homopolymer.

Polypropylene in the microporous layer (B) is preferably a homopolymer and may also be a copolymer co-polymerized with a small amount of comonomer other than propylene, such as an $\alpha$-olefin comonomer, examples of such a copolymer including a block polymer. For example, the amount of propylene structural units contained as repeating units in polypropylene may be, but not limited to, 70 mol% or greater, 80 mol% or greater, 90 mol% or greater, 95 mol% or greater, or 99 mol% or greater. For example, the amount of repeating units contained in polypropylene, the units being derived from a comonomer other than the propylene structure, may be, but not limited to, 30 mol% or less, 20 mol% or less, 10 mol% or less, 5 mol% or less, or 1 mol% or less. One type of polypropylene may be singly used, or a mixture of two or more types may be used.

The weight-average molecular weight (Mw) of the polypropylene in the microporous layer (B) is preferably 250,000 or greater from the viewpoint of the strength of the microporous layer, and the like and the viewpoint of dielectric strength and is preferably 1,000,000 or less from the viewpoint of increasing the pore size of the microporous layer and exhibiting excellent air permeability. Mw of polypropylene is more preferably 400,000 or greater and 950,000 or less, yet more preferably 550,000 or greater and 900,000 or less, further more preferably 600,000 or greater and 900,000 or less, and particularly preferably 700,000 or greater and 900,000 or less.

The upper limit of a molecular weight distribution (Mw/Mn) being a value acquired by dividing the weight-average molecular weight (Mw) of polypropylene in the microporous layer (B) by the number-average molecular weight (Mn) is preferably 7 or less, more preferably 6.5 or less, 6 or less, 5.5 or less, or 5 or less. As the value of Mw/Mn of polypropylene decreases, the melt tension of the acquired microporous layer also tends to decrease. Accordingly, the value of Mw/Mn of polypropylene being 7 or less is preferable for controlling the melt tension of the microporous layer (B) to be low. Further, Mw/Mn may be preferably 1 or greater, such as 1.3 or greater, 1.5 or greater, 2.0 or greater, or 2.5 or greater. Mw/Mn being 1 or greater may allow moderate molecular entanglement to be maintained, which may result in excellent stability during membrane formation.

The density of polypropylene in the microporous layer (B) may be preferably 0.85 g/cm$^3$ or greater, such as 0.88 g/cm$^3$ or greater, 0.89 g/cm$^3$ or greater, or 0.90 g/cm$^3$ or greater. The density of polypropylene may be preferably 1.1 g/cm$^3$ or less, such as 1.0 g/cm$^3$ or less, 0.98 g/cm$^3$ or less, 0.97 g/cm$^3$ or less, 0.96 g/cm$^3$ or less, 0.95 g/cm$^3$ or less, 0.94 g/cm$^3$ or less, 0.93 g/cm$^3$ or less, or 0.92 g/cm$^3$ or less. The density of polyolefin is related to the crystallinity of polypropylene; and by setting the density of polypropylene to 0.85 g/cm$^3$ or higher, the productivity of microporous layer production is improved, which is particularly advantageous in the dry method.

The microporous layer (B) may contain another resin as long as the layer has a polyolefin as a principal component. Examples of another resin include a polyolefin other than polypropylene (also referred to as "another polyolefin"). A polyolefin is a polymer containing a monomer having a carbon-carbon double bond as a repeating unit. Examples of a monomer constituting a polyolefin other than polypropylene include, but not limited to, monomers having carbon-carbon double bonds and two or four to ten carbon atoms, such as ethylene, 1-butene, 4-methyl-1-pentene, 1-hexene, and 1-octene.

The microporous layer (B) may contain a thermoplastic elastomer in addition to polypropylene. Examples of a thermoplastic elastomer include, but not limited to, polypropylene, a polyolefin other than polypropylene (also referred to as "another polyolefin"), and a copolymer of polystyrene and a polyolefin. Examples of polypropylene include low-crystallinity polypropylene including a low-stereoregularity region. A polyolefin is a polymer containing a monomer with a carbon-carbon double bond as a repeating unit. Examples of a monomer constituting a polyolefin other than polypropylene include, but not limited to, monomers having carbon-carbon double bonds and two or four to ten carbon atoms, such as ethylene, 1-butene, 4-methyl-1-pentene, 1-hexene, and 1-octene. Examples of a polyolefin include a homopolymer, a copolymer, and a multistage polymer; and, as an example, polyolefin may contain polyethylene. Preferable examples of a copolymer of polystyrene and a polyolefin include a styrene-(ethylene-propylene)-styrene copolymer (SEPS), a styrene-(ethylene-butene)-styrene copolymer (SEBS), a hydrogenated styrene-(ethylene-butene)-styrene copolymer (hydrogenated SEBS), a styrene-ethylene-styrene copolymer, a crystalline olefin-(ethylene-butene)-crystalline olefin copolymer (CEBC), a hydrogenated crystalline olefin-(ethylene-butene)-crystalline olefin copolymer (hydrogenated CEBC), a styrene-(ethylene-butene)-crystalline olefin copolymer (SEBC), and a hydrogenated styrene-(ethylene-butene)-crystalline olefin copolymer (hydrogenated SEBC). Particularly preferable examples include a hydrogenated styrene-(ethylene-butene)-styrene copolymer (hydrogenated SEBS), a hydrogenated styrene-(ethylene-butene)-crystalline olefin copolymer (hydrogenated SEBC), and a styrene-(ethylene-propylene)-styrene copolymer (SEPS)

An elastomer incompatible with polypropylene is more preferable as a thermoplastic elastomer contained in the microporous layer (B) from the viewpoint of porosity and increase in the pore diameter. Preferable examples of an elastomer incompatible with polypropylene include, but not particularly limited to, a copolymer of polyethylene and another polyolefin and a copolymer of polystyrene and a polyolefin. Preferred examples of a copolymer of polystyrene and a polyolefin include a styrene-(ethylene-propylene)-styrene copolymer (SEPS), a styrene-(ethylene-butene)-styrene copolymer (SEBS), a hydrogenated styrene-(ethylene-butene)-styrene copolymer (hydrogenated SEBS), a styrene-ethylene-styrene copolymer, a crystalline olefin-(ethylene-butene)-crystalline olefin copolymer (CEBC), a hydrogenated crystalline olefin-(ethylene-butene)-crystalline olefin copolymer (hydrogenated CEBC), a styrene-(ethylene-butene) crystalline olefin copolymer (SEBC), and a hydrogenated styrene-(ethylene-butene) crystalline olefin copolymer (hydrogenated SEBC). Particularly preferable examples include a hydrogenated styrene-(ethylene-butene)-styrene copolymer (hydrogenated SEBS), a hydrogenated styrene-(ethylene-butene)-crystalline olefin copolymer (hydrogenated SEBC), and a styrene-(ethylene-propylene)-styrene copolymer (SEPS).

<Melt Flow Rate (MFR) of Microporous Layer (B)>

The upper limit of the melt flow rate (MFR) of the microporous layer (B) (the MFR of a single layer) is preferably 8.0 g/10 min or less and may be, for example, 6.0 g/10 min or less, 4.0 g/10 min or less, 3.0 g/10 min or less, 2.0 g/10 min or less, or 1.1 g/10 min or less from the viewpoint of acquiring a microporous layer (B) with higher strength. For example, the lower limit of the MFR of the microporous layer (B) (the MFR of a single layer) may be, but not limited to, 0.3 g/10 min or greater, 0.35 g/10 min or greater, 0.4 g/10 min or greater, 0.45 g/10 min or greater, or 0.5 g/10 min or greater from a viewpoint of exhibiting excellent air permeability. The MFR of the microporous layer (B) is measured under conditions of a load of 2.16 kg and a temperature of 230°C for polypropylene and under conditions of a load of 2.16 kg and a temperature of 190°C for polyethylene.

The MFR of the microporous layer (B) being 8.0 g/10 min or less means that the molecular weight of polyolefin contained in the microporous layer (B) is to some extent high. The number of tie molecules binding crystalline materials to each other increases due to a high molecular weight of polyolefin, and therefore, a microporous layer (B) with high strength tends to be acquired. The MFR of the microporous layer (B) being 0.3 g/10 min or greater prevents the melt tension of the microporous layer (B) from becoming excessively high and further facilitates acquisition of a separator exhibiting excellent air permeability.

The MFR of polypropylene in the microporous layer (B) is preferably 8.0 g/10 min or less and, for example, may be 6.0 g/10 min or less, 4.0 g/10 min or less, 3.0 g/10 min or less, 2.0 g/10 min or less, or 1.1 g/10 min or less from the viewpoint of acquiring a microporous layer (B) with higher strength. For example, the lower limit of the MFR of the microporous layer (B) (the MFR of a single layer) may be, but not limited to, 0.3 g/10 min or greater, 0.35 g/10 min or greater, 0.4 g/10 min or greater, 0.45 g/10 min or greater, or 0.5 g/10 min or greater from the viewpoint of exhibiting excellent air permeability.

When both the microporous layer (A) and the microporous layer (B) have polypropylene as a principal component or when both the microporous layer (A) and the microporous layer (B) have polyethylene as a principal component, the MFR of the microporous layer (B) is preferably greater than the MFR of the microporous layer (A). By setting the MFR of the microporous layer (B) greater than the MFR of the microporous layer (A), the pore diameter of the microporous layer (B) in the acquired separator can be controlled to be larger than the pore diameter of the microporous layer (A).

<Pentad Fraction of Microporous Layer (B)>

The lower limit of the pentad fraction of polypropylene in the microporous layer (B) may be preferably 94.0% or greater, such as 95.0% or greater, 96.0% or greater, 96.5% or greater, 97.0% or greater, 97.5% or greater, 98.0% or greater, 98.5% or greater, or 99.0% or greater, from the viewpoint of acquiring a microporous layer with low air permeability. The upper limit of the pentad fraction of polypropylene may be, but not limited to, 99.9% or less, 99.8% or less, or 99.5% or less. The pentad fraction of polypropylene is measured by using $^{13}$C-nuclear magnetic resonance (NMR).

The pentad fraction of polypropylene being 94.0% or greater indicates high crystallinity of polypropylene. A separator acquired by the stretching-induced pore formation method, particularly the dry method, has pores formed by stretching an amorphous part between crystalline materials; and therefore, when the crystallinity of polypropylene is high, the porosity is improved, and the air permeability can be kept low, which enables higher battery output.

<Melt Tension of Microporous Layer (B)>

The melt tension $Mt_B$ of the microporous layer (B) at 240°C is preferably 4 mN or greater and 30 mN or less. The lower limit of the melt tension $Mt_B$ is preferably 4 mN or greater, more preferably 7 mN or greater, yet more preferably 10 mN or greater, particularly preferably 13 mN or greater, and most preferably 16 mN or greater from the viewpoint of excellent membrane formability and productivity of the separator substrate including the microporous layer (A) and the microporous layer (B). The upper limit of the melt tension $Mt_B$ is preferably 30 mN or less, more preferably 28 mN or less, yet more preferably 26 mN or less, and most preferably 24 mN or less from the viewpoint of providing a large pore diameter and exhibiting excellent air permeability. The melt tension $Mt_A$ of the microporous layer (A) and the melt tension $Mt_B$ of the microporous layer (B) at a temperature of 240°C may differ from each other from the viewpoint of the area-average major axis pore diameter of the microporous membrane.

<Area-average Major Axis Pore Diameter of Microporous Layer (B)>

The area-average major axis pore diameter of the microporous layer (B) at an MD-ND cross section (hereinafter simply referred to as the "area-average major axis pore diameter") is larger than the area-average major axis pore diameter of the microporous layer (A). Refer to the section "Area-average Major Axis Pore Diameter of Microporous Layer (A)" for details of the relation with the area-average major axis pore diameter of the microporous layer (A).

The area-average major axis pore diameter of the microporous layer (B) at an MD-ND cross section is preferably 100 nm or greater and 600 nm or less, more preferably 120 nm or greater and 500 nm or less, yet more preferably 140 nm or greater and 400 nm or less, and further more preferably 160 nm or greater and 350 nm or less. When the area-average major axis pore diameter of the microporous layer (B) falls within the range, more excellent dielectric strength can be acquired.

<Porosity of Microporous Layer (B)>

The porosity of the microporous layer (B) is preferably 20% or greater from the viewpoint of clogging avoidance in the power storage device and the viewpoint of acquiring excellent air permeability of the separator and is preferably 70% or less from the viewpoint of maintaining the strength of the separator. The porosity of the microporous layer (B) is more preferably 25% or greater and 65% or less, yet more preferably 30% or greater and 60% or less, and particularly preferably 35% or greater and 60% or less.

<Thickness of Microporous Layer (B)>

The thickness of the microporous layer (B) according to the present disclosure may be preferably 10 $\mu$m or less, such as 8 $\mu$m or less, 7 $\mu$m or less, 6 $\mu$m or less, 5 $\mu$m or less, 4.5 $\mu$m or less, or 4 $\mu$m or less, from the viewpoint of energy densification in the power storage device, and the like. The lower limit of the thickness of the microporous layer (B) may be preferably 1 $\mu$m or greater, such as 2 $\mu$m or greater, 3 $\mu$m or greater, or 3.5 $\mu$m or greater, from the viewpoint of strength and the like.

<Additive in Microporous Layer (B)>

The microporous layer (B) having polypropylene as a principal component may further contain additives, such as an elastomer, a crystallization nucleating agent, an antioxidant, and a filler as needed, in addition to polypropylene. For example, the amount of the additives may be, but not particularly limited, 0.01% by weight or greater, 0.1% by weight or greater, or 1% by weight or greater, and 10% by weight or less, 7% by weight or less, or 5% by weight or less, on the basis of the total weight of the microporous layer (B).

<Relation between Microporous Layer (A) and Microporous Layer (B)>

The ratio $Mt_A/Mt_B$ between the melt tension $Mt_A$ of the microporous layer (A) at 240°C and the melt tension $Mt_B$ of the microporous layer (B) at 240°C is preferably 1.05 or greater and 4.0 or less. By setting the ratio $Mt_A/Mt_B$ to 1.05 or greater, the pore diameter of the microporous layer (A) in the acquired separator can be controlled to be sufficiently small, and the pore diameter of the microporous layer (B) can be controlled to be sufficiently large, which enables both excellent dielectric strength and excellent air permeability. By setting $Mt_A/Mt_B$ to 4.0 or less, a separator having an excellent porous nature and excellent air permeability can be acquired. Note that $Mt_A/Mt_B$ is more preferably 1.1 or greater and 3.5 or less, yet more preferably 1.15 or greater and 3.3 or less, particularly preferably 1.2 or greater and 3.0 or less, and most preferably 1.25 or greater and 2.5 or less.

When both the microporous layer (A) and the microporous layer (B) have polypropylene as a principal component or when both the microporous layer (A) and the microporous layer (B) have polyethylene as a principal component, the ratio $MFR_B/MFR_A$ between the MFR of the microporous layer (B) ($MFR_B$) and the MFR of the microporous layer (A) ($MFR_A$) is preferably 1.02 or greater and 10.0 or less. By setting $MFR_B/MFR_A$ to 1.02 or greater, the pore diameter of the microporous layer (A) in the acquired separator can be controlled to be sufficiently small, and the pore diameter of the microporous layer (B) can be controlled to be sufficiently large, which enables both excellent dielectric strength and excellent air permeability. By setting $MFR_B/MFR_A$ to 10.0 or less, a separator having stable membrane formability and productivity, and an excellent porous nature and excellent air permeability can be acquired. Note that $MFR_B/MFR_A$ is more preferably 1.05 or greater and 6.0 or less, yet more preferably 1.1 or greater and 5.0 or less, particularly preferably 1.1 or greater and 4.0 or less, and most preferably 1.1 or greater and 3.0 or less.

The ratio $Mw_A/Mw_B$ between the weight-average molecular weight $Mw_A$ of polypropylene in the microporous layer (A) and the weight-average molecular weight $Mw_B$ of polypropylene in the microporous layer (B) is preferably 1.02 or greater and 2.0 or less. By setting $Mw_A/Mw_B$ to 1.02 or greater, the melt tension ratio $Mt_A/Mt_B$ between the microporous layer (A) and the microporous layer (B) can be controlled to be high, and as a result, both excellent dielectric strength and excellent air permeability can be achieved. By setting $Mt_A/Mt_B$ to 2.0 or less, a separator having stable membrane formability and productivity, and an excellent porous nature and excellent air permeability can be acquired. Note that $Mw_A/Mw_B$ is preferably 1.02 or greater and 1.8 or less, more preferably 1.03 or greater and 1.6 or less, and most preferably 1.05 or greater and 1.4 or less.

<Layer Structure of Separator Substrate>

The substrate of the separator for a power storage device (herein simply referred to as the "separator substrate") includes at least one each of the microporous layer (A) and the microporous layer (B), or at least one microporous layer (A). The separator substrate may have a multilayer structure including three or more layers including two or more layers of at least one of the microporous layer (A) and/or the microporous layer (B). Examples of such a structure include a microporous layer (A)/microporous layer (B) two-layer structure and a microporous layer (A)/microporous layer (B)/microporous layer (A) three-layer structure. The separator substrate may include a layer other than the microporous layer (A) and the microporous layer (B). Examples of a layer other than the microporous layer (A) and the microporous layer (B) include a microporous layer, other than (A) and (B), having a polyolefin as a principal component, a layer containing an inorganic substance, and a layer containing a heat-resistant resin. For example, the separator substrate may have a multilayer structure including four or more layers, such as a microporous layer (A)/microporous layer (B)/microporous layer (C)/microporous layer (A) structure. A symmetrical laminated structure is preferable from the viewpoint of ease of manufacturing, suppression of separator curling, and the like. The microporous membrane as the separator substrate according to the present disclosure may employ any of the laminated structures described above; and it is preferable that the microporous layers (A) and (B) be laminated in the laminated structure, the microporous layers (A) and (B) be in contact with each other, the microporous layers (A) and (B) be adjacent to each other, or the interface between the microporous layers (A) and (B) be observed from the viewpoint of the mechanism of action of the microporous layers (A) and (B) containing polypropylene as a principal component.

<Trunk Height of Separator Substrate>

The trunk height of the separator substrate at an MD-ND cross section is preferably 1000 nm or less. The separator substrate used for measurement of the trunk height may be the microporous membrane described above. The trunk height is a numerical value correlated with the tortuosity of a pore and indicating a pore structure differently from the pore diameter. As the trunk height increases, the tortuosity of a pore decreases; and as the trunk height decreases, the tortuosity of the pore increases, and excellent dielectric strength can be acquired. The upper limit of the trunk height is preferably 1000 nm or less, more preferably 950 nm or less, yet more preferably 920 nm or less, particularly preferably 900 nm or less, and most preferably 850 nm or less from the viewpoint of dielectric strength. The lower limit of the trunk height is preferably 500 nm or greater, more preferably 520 nm or greater, yet more preferably 550 nm or greater, particularly preferably 580 nm or greater, and most preferably 600 nm or greater from the viewpoint of acquiring excellent air permeability.

The trunk height can be calculated by performing cross-sectional SEM observation on an MD-ND cross section of the separator substrate or an MD-ND cross section of a microporous membrane that can be used as the separator substrate, removing the fibrils by image analysis, and measuring the length of the remaining lamella in the ND by image analysis. Detailed conditions will be described in Examples. While the number-average trunk height and the length-average trunk height can be calculated when the trunk height is measured from a cross-sectional SEM image, the length-average trunk height is herein used as the trunk height in order to allow better correlation with properties of the separator.

<Thickness of Separator Substrate>

The upper limit of the thickness of the separator substrate or the upper limit of the thickness of a microporous membrane that can be used as the separator substrate is preferably 20 $\mu$m or less, more preferably 18 $\mu$m or less, yet more preferably 16 $\mu$m or less, particularly preferably 14 $\mu$m or less, and most preferably 13 $\mu$m or less from the viewpoint of energy densification in the power storage device, and the like. The lower limit of the thickness of the separator substrate or the lower limit of the thickness of a microporous membrane that can be used as the separator substrate is preferably 8 $\mu$m or greater and may be more preferably 9 $\mu$m or greater and yet more preferably 10 $\mu$m or greater from the viewpoint of strength and the like.

<Air Permeability (Air Permeation Resistance) of Separator Substrate>

The upper limit of the air permeability of the separator substrate is preferably 400 sec/100 cm$^3$ or less, more preferably 350 sec/100 cm$^3$ or less, yet more preferably 300 sec/100 cm$^3$ or less, particularly preferably 250 sec/100 cm$^3$ or less, and most preferably 200 sec/100 cm$^3$ or less from the viewpoint of guaranteeing excellent output in the power storage device. For example, the lower limit of the air permeability of the separator substrate may be, but not limited to, 10 sec/100 cm$^3$ or greater, 20 sec/100 cm$^3$ or greater, or 30 sec/100 cm$^3$ or greater. The separator substrate used for measurement of the air permeability may be the microporous membrane described above.

<Porosity of Separator Substrate>

The lower limit of the porosity of the separator substrate is preferably 40% or greater, more preferably 41% or greater, yet more preferably 42% or greater, and particularly preferably 43% or greater from the viewpoint of clogging avoidance in the power storage device and the viewpoint of acquiring excellent air permeability of the separator. The upper limit of the porosity of the separator substrate is preferably 54% or less, more preferably 53% or less, and yet more preferably 52% or less from the viewpoint of maintaining the strength of the separator and acquiring excellent dielectric strength. The separator substrate used for measurement of the porosity may be a microporous membrane as described above.

<Dielectric Strength of Separator Substrate>

The dielectric strength of the separator substrate converted to a thickness of 10 $\mu$m is preferably 0.80 kV or greater, more preferably 0.90 kV or greater, yet more preferably 0.95 kV or greater, particularly preferably 1.00 kV or greater, and most preferably 1.05 kV or greater from the viewpoint of short circuiting suppression in the power storage device. The separator substrate used for measurement of the dielectric strength may be the microporous membrane described above.

<Puncture Strength of Separator Substrate>

The lower limit of the puncture strength of the separator substrate converted to a thickness of 10 $\mu$m is preferably 150 gf or greater (approximately 1.47 N or greater), more preferably 180 gf or greater, 200 gf or greater, 220 gf or greater, or 250 gf or greater, and particularly preferably 270 gf or greater. The upper limit of the puncture strength of the separator substrate converted to a thickness of 10 $\mu$m may be, but not limited to, preferably 400 gf or less, such as 380 gf or less or 350 gf or less. The separator substrate used for measurement of the puncture strength may be the microporous membrane as described above.

<Thermal Contraction Rate of Separator Substrate>

The thermal contraction rate of the separator substrate in the width direction (TD) after a heat treatment is performed at 105°C for 1 hour is preferably 5% or less and more preferably -1.0% or greater and 3.0% or less. In other words, the above means that a separator substrate with a TD thermal contraction rate of 5% or less at 105°C exhibits very little thermal contraction in the TD also at a high temperature. Further, the thermal contraction rate being 5% or less or 3.0% or less allows effective suppression of short circuiting at a high temperature. The reason that the thermal contraction rate is -1.0% or greater is that the substrate expands in the TD, and the thermal contraction rate may take on a negative value less than 0% during measurement of the thermal contraction rate. The thermal contraction rate may be 0% or greater or greater than 0%. Examples of a method for manufacturing a separator substrate with the thermal contraction rate equal to or less than 5%, or equal to or greater than -1.0% and equal to or less than 3.0% include a method of manufacturing a separator by uniaxial stretching in the MD and preferably include a method of manufacturing a separator by a dry method based on uniaxial stretching. A method for manufacturing a separator based on biaxial stretching in the MD and the TD, represented by a wet separator, generally exhibits very extensive thermal contraction in the TD, whereas a separator substrate with the thermal contraction rate equal to or less than 5%, or equal to or greater than -1.0% and equal to or less than 3.0% can be easily acquired with a dry separator based on uniaxial stretching. The separator substrate used for measurement of the thermal contraction rate may be the microporous membrane described above.

<Tensile Strength of Separator Substrate>

The tensile strength of the separator substrate is preferably 1500 kgf/cm$^2$ or greater (approximately 14.7 kN/cm$^2$ or greater), more preferably 1600 kgf/cm$^2$ or greater, yet more preferably 1700 kgf/cm$^2$ or greater, particularly preferably 1800 kgf/cm$^2$ or greater, and most preferably 1900 kgf/cm$^2$ or greater from the viewpoint of workability during battery winding. The upper limit of the tensile strength of the separator substrate may be, but not limited to, preferably 4000 kgf/cm$^2$ or less, such as 3800 kgf/cm$^2$ or less, or 3500 kgf/cm$^2$ or less. The separator substrate used for measurement of the tensile strength may be the microporous membrane described above.

<Average Flow Pore Diameter of Separator Substrate>

<Average Flow Pore Diameter>

The average flow pore diameter of the microporous layer falls within a range from 15 nm to 30 nm. A microporous layer with an average flow pore diameter within the aforementioned numerical range preferably contains polypropylene as a principal component, may be, for example, the microporous layer (A) or (B) described above, and is more preferably the microporous layer (B). The lower limit of the average flow pore diameter is preferably 15 nm or greater, such as 20 nm or greater. The upper limit of the average flow pore diameter that can be combined with any of the lower limits is preferably 30 nm or less, such as 25 nm or less. The average flow pore diameter is one of the characteristics related to the pore structure inside the microporous layer; and the average flow pore diameter falling within the range from 15 nm to 30 nm indicates that the microporous layer has a pore structure through which current does not flow linearly (a structure with high tortuosity), and having such a pore structure is considered to improve the dielectric strength. Further, the average flow pore diameter being 15 nm or greater indicates that the microporous layer has a pore structure in which fine pores are interconnected; and such a pore structure allows a separator with high ion permeability to be acquired. Therefore, when the average flow pore diameter is 15 nm or greater, low resistance can be maintained, and a separator excellently balanced with high dielectric strength can be acquired. On the other hand, the average flow pore diameter being 30 nm or less indicates decrease in the pore straightness in the microporous layer, by which high dielectric strength can be maintained; and therefore, the safety and the yield of the power storage device can be improved. Then, when the average flow pore diameter is 30 nm or less, the aforementioned pore structure is less likely to become the starting point of stress concentration, which facilitates maintenance of the strength of the separator.

The average flow pore diameter is measured with a perm porometer. The average flow pore diameter can be mainly controlled by the MFR of the microporous layer. When the MFR is low, the microporous layer can be strongly oriented, which allows generation of many starting points of pore formation during cold stretching and acquisition of a small average flow pore diameter during hot stretching. While the details on how the average flow pore diameter can be controlled by the stretching ratio will be described later, when the cold stretching ratio is decreased and the hot stretching ratio is increased, the pores become larger, and therefore, the average flow pore diameter increases. The reason is that the number of starting points of pore formation decreases due to a smaller cold stretching ratio and the starting points expand by hot stretching, and therefore, a larger average flow pore diameter is more easily acquired.

<Area-average Major Axis Pore Diameter>

The area-average major axis pore diameter of the surface of the microporous layer is 140 nm or greater and 300 nm or less. A microporous layer having an area-average major axis pore diameter on the surface falling within the aforementioned numerical range preferably contains polypropylene as a principal component, may be, for example, the microporous layer (A) or (B) described above, and is more preferably the microporous layer (B). The lower limit of the area-average major axis pore diameter is preferably 140 nm or greater, such as 150 nm or greater, 160 nm or greater, or 170 nm or greater. The upper limit of the area-average major axis pore diameter that can be combined with any of the lower limits is preferably 300 nm or less, such as 290 nm or less, 280 nm or less, 270 nm or less, 260 nm or less, 250 nm or less, 240 nm or less, 230 nm or less, 220 nm or less, 210 nm or less, 200 nm or less, 190 nm or less, or 180 nm or less. By the area-average major axis pore diameter of the surface of the microporous layer being 140 nm or greater, high permeability can be maintained, clogging can be reduced, and high output can be more easily maintained. By the area-average major axis pore diameter being 300 nm or less, a separator not having an excessively large pore diameter (porosity) and having sufficient strength and being excellently balanced with high dielectric strength can be acquired.

The area-average major axis pore diameter of the surface is measured with an SEM. The area-average major axis pore diameter of the surface of the microporous layer can be mainly controlled by the MFR of a resin constituting the surface of the microporous layer. When the resin constituting the surface of the microporous layer has a high MFR, the orientation of the microporous layer weakens, and therefore, starting points of the pore formation during cold stretching decreases, and a large area-average major axis pore diameter of the surface can be acquired during hot stretching. The reason is that the number of starting points decreases due to a low cold stretching ratio, and the starting points expand by hot stretching; and therefore, a large pore is more likely to be acquired on the surface. The effect of the hot stretching ratio is particularly significant.

A microporous layer having polypropylene as a principal component can exhibit effects such as high dielectric strength and high strength by satisfying the average flow pore diameter and the area-average major axis pore diameter of the surface that are described above. The microporous layer can exhibit more significant effects by further meeting optional requirements for the MFR, the porosity, the thickness, the TD thermal contraction rate, and the like that are described below.

<Method for Manufacturing Separator for Power Storage Device>

A method for manufacturing a separator for a power storage device includes a melt extrusion process of acquiring a resin sheet (a precursor sheet) by melt-extruding a resin composition having polypropylene as a principal component (also referred to as a "polypropylene-based resin composition") and a pore formation process of making the acquired precursor sheet porous by pore formation. The methods for manufacturing a microporous layer are roughly classified into a dry method not using a solvent in the pore formation process and a wet method using a solvent.

Examples of the dry method include a method of melt-kneading and extruding a polypropylene-based resin composition and then separating the polypropylene crystal interface by a heat treatment and stretching, and a method of forming a membrane from a polypropylene-based resin composition and an inorganic filler by melt kneading and then separating the interface between polypropylene and the inorganic filler by stretching.

Examples of the wet method include a method of melt kneading a polypropylene-based resin composition and a pore forming material to form a film shape, stretching the film shape as needed, and then extracting the pore forming material, and a method of dissolving a polypropylene-based resin composition and then solidifying polypropylene and removing the solvent at the same time by immersing the composition in a poor solvent for polypropylene.

A single-screw extruder and a twin-screw extruder may be used for melt kneading of a polypropylene-based resin composition, and examples of other equipment that may also be used include a kneader, a Labo Plastomill, a kneading roll, and a Banbury mixer.

The polypropylene-based resin composition may optionally contain a resin other than polypropylene and an additive depending on the method for manufacturing the microporous layer or physical properties of the target microporous layer. Examples of an additive include a pore forming material, a fluorine-based flow modifier, wax, a crystal nucleating agent, an antioxidant, metallic soaps such as a metal salt of an aliphatic carboxylic acid, an ultraviolet absorber, a light stabilizer, an antistatic agent, an antifog agent, and a color pigment. Examples of a pore forming material include a plasticizer, an inorganic filler, and a combination of the two.

Examples of a plasticizer include hydrocarbons such as liquid paraffin and paraffin wax, esters such as dioctyl phthalate and dibutyl phthalate, and higher alcohols such as oleyl alcohol and stearyl alcohol.

Examples of an inorganic filler include oxide-based ceramics such as alumina, silica (silicon oxide), titania, zirconia, magnesia, ceria, yttria, zinc oxide, and iron oxide; nitride-based ceramics such as silicon nitride, titanium nitride, and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fibers.

A preferred method for manufacturing a separator substrate is a dry lamellar crystal pore formation process separating the polypropylene crystal interface by a heat treatment and stretching. A method for manufacturing a separator substrate including the microporous layer (A) and the microporous layer (B) preferably uses at least one of the following methods (i) and (ii):

(i) a method for manufacturing a separator substrate by coextrusion membrane formation, the method including acquiring a precursor sheet by forming the microporous layer (A) and the microporous layer (B) by coextrusion, and performing annealing, cold stretching, hot stretching, and thermal relaxation processes on the precursor sheet; and

(ii) a method for manufacturing a separator substrate by lamination, the method including separately forming the microporous layer (A) and the microporous layer (B) by extrusion, acquiring a precursor sheet by laminating the layers, and then performing annealing, cold stretching, hot stretching, and thermal relaxation processes on the precursor sheet.

A specific average flow pore diameter and/or a specific area-average major axis pore diameter of the microporous layer according to the present disclosure can be controlled by cold stretching and hot stretching conditions. Further, it is more preferable to suitably set the cold stretching and hot stretching conditions while setting the average MFR of the microporous layer to be 0.25 g/10 min or greater and 0.90 g/10 min or less.

Out of the coextrusion process (i) and the lamination process (ii) described above, the coextrusion process (i) is preferred from the viewpoint of manufacturing costs, and the like. In the coextrusion process (i), it is preferable to effectively perform rapid cooling by ejecting the resin at the lowest possible temperature and blowing low-temperature air as extrusion conditions for the microporous layers (A) and (B). It is preferable to perform rapid cooling by air after the membrane formation, the temperature of the blown air being preferably 20°C or lower and more preferably 15°C or lower. By blowing such cold air controlled at a low temperature, the resin after membrane formation is uniformly oriented in the MD.

The method for manufacturing a separator substrate may include an annealing process after extrusion membrane formation in both the coextrusion process (i) and the lamination process (ii). By performing an annealing process, the crystal structures of the microporous layers (A) and (B) tend to grow, and the porous nature tends to be improved. Applying annealing at a specific temperature for a predetermined time tends to allow both microporous layers (A) and (B) to acquire an excellent area-average major axis pore diameter. The reason is considered that the crystals grow without disturbance in the crystal structure and a highly porous nature is acquired. The temperature range of the annealing process is preferably 115°C or higher and 160°C or lower, more preferably 125°C or higher, yet more preferably at 135°C or higher, particularly preferably 140°C or higher, and most preferably 150°C or higher; and an annealing treatment is performed in the annealing process for preferably 20 minutes or longer and more preferably 60 minutes or longer. The aforementioned annealing temperature range and/or annealing treatment time tends to facilitate high orientation and provides an excellent porous nature; and excellent air permeability tends to be acquired even in the case of a high stretching ratio to be described later.

The method for manufacturing a separator substrate may include a stretching process after the annealing process. Both uniaxial stretching and biaxial stretching can be used as the stretching process. While not being limited, uniaxial stretching is preferred from the viewpoint of manufacturing costs when the dry method is used, reduction in thermal contraction in the TD, and the like. The stretching ratio of cold stretching in the MD [(dimension after stretching - dimension before stretching)/dimension before stretching $\times$ 100 (%)] is preferably 5% or greater and 50% or less. The lower limit of the stretching ratio of cold stretching in the MD is preferably 8% or greater, or 10% or greater, which allows formation of a uniform pore structure and acquisition of an excellent porous nature. The lower limit of the stretching ratio of cold stretching in the MD is more preferably 20% or greater, 25% or greater, or 30% or greater, which tends to allow design of a smaller area-average major axis pore diameter and is preferable from the viewpoint of exhibiting excellent dielectric strength. The upper limit of the stretching ratio of cold stretching in the MD is preferably 40% or less. While excellent dielectric strength can be acquired when a high stretching ratio is used in cold stretching, there is a concern that a smaller area-average major axis pore diameter may degrade air permeability, which makes achievement of both a challenge. It is effective to set or adjust a high stretching ratio and/or a high annealing temperature in order to overcome the challenge. Consequently, there is a tendency that an excellent porous nature can be acquired while a smaller area-average major axis pore diameter is designed and that both excellent dielectric strength and excellent air permeability can be achieved.

Applying cold stretching and hot stretching under the aforementioned stretching conditions facilitates control of the average flow pore diameter and/or the area-average major axis pore diameter to take on specific values. Furthermore, use of a polypropylene resin providing an MFR of the microporous layer equal to or greater than 0.25 g/10 min and equal to or less than 0.90 g/10 min further facilitates control of the average flow pore diameter and/or the area-average major axis pore diameter.

In order to suppress thermal contraction of the separator substrate, a heat treatment process may be performed after the stretching process or after the pore formation process for the purpose of thermal fixing. The heat treatment process may include a stretching operation performed in such a way as to provide a predetermined temperature and a predetermined stretching ratio for the purpose of adjusting physical properties and/or a relaxation operation performed in such a way as to provide a predetermined temperature and a predetermined relaxation ratio for the purpose of reducing contraction stress applied during membrane formation and stretching. The relaxation operation may be performed after the stretching operation is performed. The heat treatment processes can be performed by using a tenter or a roll stretching machine.

Performing the stretching operation at a specific stretching ratio or greater tends to allow acquisition of an excellent trunk height in the aforementioned heat treatment process. The hot stretching ratio in the aforementioned heat treatment process is preferably 160% or greater, more preferably 170% or greater, and yet more preferably 180% or greater. The reason is that while pore formation providing a greater area-average pore diameter takes priority at a specific stretching ratio or less, a higher hot stretching ratio causes a structural change accompanied by a decreased trunk height after sufficient pore formation. Consequently, excellent dielectric strength tends to be exhibited.

When polypropylene and polyethylene are used as materials of the microporous layer in the coextrusion process, it is difficult to form membranes at the optimum temperature and the optimum cooling condition in all layers of a lamination-structured separator. When a membrane is formed under conditions suited to polypropylene, a greater trunk height is more likely to be acquired compared with the case of having polypropylene as a principal component in all layers; and the heat treatment process is preferably performed at a higher hot stretching ratio. When polyethylene is used, the hot stretching ratio in the aforementioned heat treatment process is preferably 180% or greater, more preferably 190% or greater, and yet more preferably 200% or greater.

The acquired separator substrate can be used directly as a separator for a power storage device without further processing. Optionally, an additional layer such as a coating layer may be provided on one or both sides of the separator substrate, and a surface treatment such as a corona treatment may be applied as needed.

<Power Storage Device>

A power storage device according to the present disclosure includes the separator for a power storage device according to the present disclosure. The power storage device according to the present disclosure includes a positive electrode and a negative electrode, and the separator for a power storage device according to the present disclosure is preferably placed between the positive electrode and the negative electrode.

Examples of the power storage device include, but not limited to, lithium secondary batteries (including an all-solid-state lithium battery, a lithium-sulfur battery, and a lithium-air battery), a lithium-ion secondary battery, a sodium secondary battery, a sodium-ion secondary battery, a magnesium secondary battery, a magnesium-ion secondary battery, a calcium secondary battery, a calcium-ion secondary battery, an aluminum secondary battery, an aluminum-ion secondary battery, a nickel-hydrogen battery, a nickel-cadmium battery, an electric double-layer capacitor, a lithium-ion capacitor, a redox flow battery, and a zinc-air battery. Among the above, lithium secondary batteries, a lithium-ion secondary battery, and a lithium-ion capacitor are preferable from the viewpoint of high energy density, lower cost, and durability, and a lithium-ion secondary battery is more preferable.

For example, the power storage device can be produced by forming a laminated electrode body or a wound electrode body by laminating a positive electrode and a negative electrode through the separator described above and winding the two as needed, then loading the body into a housing, connecting the positive electrode and the negative electrode to a positive electrode terminal and a negative electrode terminal of the housing through a lead body or the like, and further sealing the housing after injecting a nonaqueous solvent such as chain or cyclic carbonate, and a nonaqueous electrolyte solution containing an electrolyte such as a lithium salt into the housing.

The power storage device is more preferably a lithium-ion secondary battery, and a preferred embodiment of the lithium-ion secondary battery will be described.

A generally known positive electrode may be used as the positive electrode without being particularly limited as long as the positive electrode functions as a positive electrode for a lithium-ion secondary battery. The positive electrode preferably contains one or more types of materials selected from a group including materials that can occlude and release lithium ions as positive electrode active materials. Examples of a preferred positive electrode include lithium cobalt oxides represented by $LiCoO_2$, spinel-type lithium manganese oxides represented by $Li_2Mn_2O_4$, spinel-type lithium nickel manganese oxides represented by $Li_2Mn_{1.5}Ni_{0.5}O_4$, lithium nickel oxides represented by $LiNiO_2$, lithium-containing composite metal oxides represented by $LiMO_2$ (where M denotes two or more types of elements selected from a group including Ni, Mn, Co, Al, and Mg), and lithium iron phosphate compounds represented by $LiFePO_4$ from the viewpoint of battery capacity and safety. Among the above, from the viewpoint of high safety and long-term stability, more preferable examples include lithium cobalt oxides represented by $LiCoO_2$, lithium nickel oxides represented by $LiNiO_2$, lithium-containing composite metal oxides represented by $LiMO_2$ (where M denotes two or more types of elements selected from a group including Ni, Mn, Co, Al, and Mg), and lithium iron phosphate compounds represented by $LiFePO_4$, and particularly preferable examples include lithium iron phosphate compounds represented by $LiFePO_4$.

The negative electrode is not particularly limited and may be a generally known negative electrode as long as the negative electrode functions as a negative electrode of a lithium-ion secondary battery. The negative electrode preferably contains one or more types of materials selected from a group including, as negative electrode active materials, materials that can occlude and release lithium ions, and metal lithium. In other words, the negative electrode preferably contains one or more types of materials selected from a group including, as negative electrode active materials, metal lithium, a carbon material, a material containing an element that can form an alloy with lithium, and a lithium-containing compound. Examples of such materials other than metal lithium include carbon materials represented by hard carbon, soft carbon, artificial graphite, natural graphite, pyrolytic carbon, coke, glassy carbon, a calcined body of an organic polymer compound, mesocarbon microbeads, carbon fiber, activated carbon, carbon colloid, and carbon black.

EXAMPLES

<<Measurement and Evaluation Methods>>

[Measurement of Melt Flow Rate (MFR)]

The melt flow rate (MFR) (g/10 min) of the microporous layer was measured in conformity with JIS K 7210 under conditions of a temperature of 230°C and a load of 2.16 kg or under conditions of a temperature of 190°C and a load of 2.16 kg. The MFR of polypropylene was measured in conformity with JIS K 7210 under conditions of a temperature of 230°C and a load of 2.16 kg. The melt flow rate (MFR) of polyethylene was measured in conformity with JIS K 7210 under conditions of a temperature of 190°C and a load of 2.16 kg.

[Measurement of Mw and Mn by Gel Permeation Chromatography (GPC)]

By using Agilent PL-GPC220, measurements were performed on standard polystyrene under the following conditions, and a calibration curve was created. Measurements were also performed on a polymer sample by the chromatograph under the same conditions, and based on the calibration curve, the weight-average molecular weight (Mw), the number-average molecular weight (Mn), and an MWD (Mw/Mn) acquired by dividing the weight-average molecular weight (Mw) by the number-average molecular weight (Mn) in terms of polystyrene in the polymer were calculated under the following conditions.

column: TSKgel GMHHR-H (20) HT (7.8 mm I. D. × 30 cm) two sets
mobile phase: 1,2,4-trichlorobenzene
detector: RI
column temperature: 160°C
sample concentration: 1 mg/ml
calibration curve: polystyrene

[Measurement of Melt Tension]

The melt tension (mN) of a microporous membrane or a microporous layer was measured under the following conditions by using a Capilograph manufactured by Toyo Seiki Seisaku-sho, Ltd.

- capillary: diameter 1.0 mm, length 20 mm
- cylinder extrusion speed: 2 mm/min
- take-up speed: 60 m/min
- temperature: 240°C

[Average Flow Pore Diameter]

The average flow pore diameter of the microporous layer was measured in conformity with the bubble point method (ASTM F316-86, JIS K 3832) by using a perm porometer (CFP-1500AE manufactured by Porous Materials, Inc.). As an immersion liquid, perfluoropolyester manufactured by Porous Materials, Inc. (product name: "Galwick," surface tension $\gamma$ = 15.6 dyn/cm) was used. Applied pressure and air permeation rates were measured for a drying curve and a wetting curve, and the average flow diameter dHD ($\mu$m) was found by the following equation, based on the pressure PHD (Pa) where the half curve of the acquired drying curve intersects with the wetting curve.

$$dHD = 2860 \times \gamma/PHD$$

[Measurement of Pentad Fraction]

The pentad fraction of polypropylene was calculated by using the peak height method from a $^{13}$C-NMR spectrum assigned based on the description in Polymer Analysis Handbook (edited by the Japan Society for Analytical Chemistry). The measurement of the $^{13}$C-NMR spectrum was performed by dissolving polypropylene pellets into o-dichlorobenzene-d by using the JEOL-ECZ500 under conditions of a measurement temperature of 145°C and a number of scans of 25,000.

[Measurement of Thickness ($\mu$m)]

The thickness ($\mu$m) of the separator substrate was measured at a room temperature of 23±2°C by a Digimatic Indicator IDC112 manufactured by Mitutoyo Corporation. The thickness of each microporous layer was calculated from cross-sectional SEM image data acquired by a method for evaluating an area-average major axis pore diameter to be described later.

[Measurement of Porosity (%)]

A sample having dimensions of 10 cm × 10 cm was cut from the separator or the microporous layer, the volume (cm$^3$) and the mass (g) of the sample were found, and the porosity was calculated by using the following equation, based on the volume, the mass, and the density (g/cm$^3$).

$$Porosity (\%) = (Volume - Mass/Density)/Volume \times 100$$

[Air Permeability (sec/100 cm$^3$)]

The air permeation resistance (sec/100 cm$^3$) of the separator substrate was measured by using a Gurley-type air permeability tester conforming to JIS P-8117. The air permeation resistance [sec/(100 cm$^3$·10 $\mu$m)] when the thickness of the separator substrate is converted to 10 $\mu$m was found by dividing the air permeation resistance (sec/100 cm$^3$) by the thickness ($\mu$m) of the separator and multiplying the quotient by 10 $\mu$m.

[Air Permeability (sec/100 cm$^3$) after High-temperature Treatment]

A sample acquired by cutting the separator substrate into a 100 mm $\times$ 100 mm square was placed in a hot-air dryer (DF1032 manufactured by Yamato Scientific Co., Ltd.), and a heat treatment was performed under atmospheric pressure in air at 140°C for 30 minutes. The sample was taken out of the hot-air dryer and was allowed to cool at 25°C for 10 minutes; and then, the air permeation resistance (sec/100 cm$^3$) of the separator substrate was measured by using the Gurley-type air permeability tester conforming to JIS P-8117.

[TD Thermal Contraction Rate (%)]

A sample acquired by cutting the separator substrate into a square measuring 50 mm in each of the MD and the TD and being placed on copy paper was put into a hot-air dryer (DF1032 manufactured by Yamato Scientific Co., Ltd.), and a heat treatment was performed under atmospheric pressure in air at a temperature of 105°C for 1 hour. The sample was taken out of the hot-air dryer and was allowed to cool at 25°C for 10 minutes, and then the dimensional contraction ratio in the TD was found.

thermal contraction rate (%): [dimension before heating (mm) - dimension after heating (mm)]/[dimension before heating (mm)] $\times$ 100

[Puncture Strength]

A needle with a hemispherical tip having a radius of 0.5 mm was prepared, the separator was placed between two plates each including an opening having a diameter (dia.) of 11 mm, and the needle, the separator, and the plates were set. A puncture test was performed by using "MX2-50N" manufactured by IMADA Co., Ltd. under conditions of the radius of curvature of the needle tip being 0.5 mm, the diameter of an opening in the separator holding plate being 11 mm, and the puncture speed being 25 mm/min. The needle was brought into contact with the separator, and the maximum puncture load [i.e., the puncture strength (gf)] was measured. The puncture strength (gf/10 $\mu$m) of the separator substrate converted to a thickness of 10 $\mu$m was found by dividing the puncture strength (gf) by the thickness of the separator ($\mu$m) and multiplying the quotient by 10 $\mu$m.

[Tensile Strength]

The tensile strength of the separator was measured by setting a sample length before testing to 35 mm and stretching the sample at a speed of 100 mm/min by using a tensile testing machine (TG-1kN manufactured by MinebeaMitsumi Inc.). The tensile strength was defined as a value acquired by dividing the strength when a sample yields (a tensile load value) or, when the sample was cut (ruptured) before yielding, the strength when the sample was cut (a tensile load value) by the cross-sectional area of the sample. The tensile strength of the separator was measured in the MD.

[Area-average Major Axis Pore Diameter (nm)]

The area-average major axis pore diameter was measured by image analysis of a cross-sectional SEM observation. As a pretreatment, ruthenium staining was performed on the separator, and a cross sectional sample was prepared by freeze fracturing. A cross section is assumed to be an MD-ND plane. A microscopic sample was acquired by fixing the aforementioned cross sectional sample to an SEM sample stage for cross-sectional observation by a conductive adhesive (carbon-based), drying the sample, and then performing osmium coating as a conductive treatment by using an osmium coater (HPC-30W manufactured by Vacuum Device Inc.) under conditions of an applied voltage adjustment knob setting of 4.5 and a discharge time of 0.5 seconds. Next, eight arbitrary points on each microporous layer cross section of the microporous membrane were observed by using a scanning electron microscope (S-4800 manufactured by Hitachi High-Tech Corporation) under conditions of an acceleration voltage of 1 kV, a detection signal of LA10, a working distance of 5 mm, and a magnification of 30000.
By using the OpenCV function being a library for image analysis in the environment of a programming language Python, trimming was performed on the observed image in such a way that the image includes only a cross section of one microporous layer and that the surface, the outside, and other microporous layers are removed; and then, the resin part and the pore part were separated by binarizing the trimmed image by using the Otsu method, and the average major axis length of the pore part was calculated. At this time, a pore of the pore area of which exists both within and out of the imaging range of 0.001 nm$^2$ or less was excluded from the measurement target. The average diameter was calculated by using the area average, based on the area of each pore.

[Trunk Height (nm)]

The trunk height was measured by image analysis of a cross-sectional SEM observation. Similarly to the calculation of the area-average major axis pore diameter, after preparation of a cross sectional sample and a microscopic sample, three arbitrary points on the microporous membrane cross section were observed under conditions of an acceleration voltage of 1 kV, a detection signal of LA10, a working distance of 5 mm, and a magnification of 5000.

By using the OpenCV function being a library for image analysis in the environment of the programming language Python, the resin part and the pore part were separated by binarizing the observed image by using the Otsu method; and then, the fibril part was removed by repeatedly performing blurring processing only in the ND. The aforementioned fibril removal processing was repeated 100 times by using a Gaussian filter within a bar-shaped processing range including 3 pixels in the ND and 1 pixel in the MD. After the blur processing, a fibril-removed image was acquired by removing noise by sequentially performing opening processing and closing processing within an elliptical processing range including 7 pixels as a major axis in the ND and 3 pixels as a minor axis in the MD.

The trunk height was calculated from the aforementioned fibril-removed image. The lengths of the resin parts in the ND across the entire range of the fibril-removed image were detected by extracting the fibril-removed image by one pixel in the MD, detecting all the lengths of resin parts in the ND, and repeating the above until the entire MD was covered. The weighted average of the numerical values of the acquired lengths of the resin parts in the ND was calculated with the lengths of the resin parts as weights, and the acquired value was determined to be the trunk height. Denoting the length of a resin part in the ND by L, the trunk height H is calculated by the following equation.

[Math. 1]

$$H = \frac{\sum_{i=1}^{n} L_i \cdot L_i}{\sum_{i=1}^{n} L_i}$$

By using a weighted average using n pieces of lengths L, the trunk height H becomes a numerical value more strongly correlated with dielectric strength.

[Dielectric Strength (kV) Measurement]

A separator substrate sandwiched between aluminum foils was set on the sample stage of a dielectric strength tester manufactured by Kikusui Electronics Co., Ltd., an electrode press member was placed on top, then the voltage was boosted from a starting voltage of 0 kV at a boosting speed of 0.025 kV/second, and the voltage value when a current of 0.2 mA flowed between the electrodes was determined to be the dielectric strength value. Further, by dividing the dielectric strength value (kV) by the separator thickness ($\mu$m) and multiplying the quotient by 10 $\mu$m, the dielectric strength (kV/10 $\mu$m) of the separator substrate converted to a thickness of 10 $\mu$m was found.

[Battery Performance (Evaluation of Dendrite Short Circuiting)]

An electrolyte solution composed of a mixture of ethylene carbonate and ethyl methyl carbonate in a volume ratio of 1:2 containing 1 mol/L of LiPF$_6$ as a lithium salt was used as an electrolyte solution.

As for a positive electrode active material, lithium nickel manganese cobalt mixed oxide (LiNi$_{0.5}$Co$_{0.2}$Mn$_{0.3}$O$_2$), carbon black powder (product name: SuperP Li, manufactured by Timcal, Ltd.) as a conductive additive, and PVDF as a binder were mixed in a weight ratio of (mixed oxide):(conductive additive):(binder) = 100:3.5:3, the mixture was applied to both sides of an aluminum foil as a positive electrode current collector with a thickness of 15 $\mu$m, and after drying, a double-sided coated positive electrode was produced by pressing the coated foil by roll pressing.

As for a negative electrode active material, graphite powder with a particle diameter of 22 $\mu$m (D50) (product name: MAG, manufactured by Hitachi Chemical Company, Ltd.), a binder (product name: BM400B, manufactured by Zeon Corporation), and carboxymethyl cellulose as a thickener (product name: #2200, manufactured by Daicel Corporation) were mixed in a weight ratio of (graphite powder):(binder):(thickener) = 100:1.5:1.1, the mixture was applied to one side and both sides of copper foils with a thickness of 10 $\mu$m as negative electrode current collectors, then, the solvent was removed by drying, and then, a single-sided coated negative electrode and a double-sided coated negative electrode were produced by pressing the respective coated copper foils by roll pressing.

The acquired positive electrodes and the acquired negative electrodes were laminated in an order of single-sided coated negative electrode/double-sided coated positive electrode/double-sided coated negative electrode/double-sided coated positive electrode/single-sided coated negative electrode while inserting a separator produced as described below between facing surfaces of the respective active materials. Note that the microporous layer (A) was placed in such a way as to face the negative electrode. Next, the acquired laminated body was inserted into a bag (a battery exterior) made of a laminated film in which both sides of an aluminum foil (thickness: 40 $\mu$m) are coated with resin layers, while protruding the terminals of the positive and negative electrodes into the bag. Subsequently, a sheet lithium-ion secondary battery was produced by injecting the electrolyte solution prepared as described above into a 0.8 mL bag and vacuum sealing the bag.

The acquired sheet lithium-ion secondary battery was accommodated in a constant temperature chamber (product name: PLM-73S, manufactured by Futaba Kagaku Co., Ltd.) set at 25°C, was then connected to a charge-discharge device (product name: ACD-01, manufactured by Asuka Electronics Co., Ltd.), and was left standing for 16 hours. Next, the initial charge and discharge of the battery was performed by repeating three charge-discharge cycles each including charging the battery at a constant current of 0.05 C until the voltage reaches 4.35 V, then charging the battery at a constant voltage of 4.35 V for 2 hours, and then discharging the battery at a constant current of 0.2 C until the voltage reaches 3.0 V. It should be noted that 1 C refers to a current value when the total capacity of the battery is discharged in 1 hour.

After the initial charge and discharge, the battery was accommodated in a constant temperature chamber set at 10°C, and a charge-discharge cycle including charging the battery at a constant current of 1 C until the voltage reaches 4.50 V, then charging the battery at a constant voltage of 4.50 V for 1 hour, then leaving the battery standing in an open-circuit state for 1 hour, and then discharging the battery at a constant current of 1 C until the voltage reaches 3.0 V was repeated 10 times; and occurrence of dendrite short circuiting was confirmed by using 10 sheet lithium-ion secondary batteries. The pass rate (%) was calculated from the number of sheet lithium-ion secondary batteries in which short circuiting did not occur out of 10 batteries. Dendrite short circuiting was determined to have occurred when the voltage dropped by 0.3 V or greater while the battery was left standing in an open circuit state after completion of charging or when the battery could not be charged to 4.5 V within 2 hours during constant-current charging at 1 C.

<<Example 1>>

[Production of Microporous Layer]

As the resin for the microporous layer (A), 100 weight% of a high-molecular-weight polypropylene resin [MFR (230°C) = 0.31 g/10 min, density = 0.91 g/cm$^3$] was melted by a 2.5-inch extruder and was supplied to both outer layers of a two-material, three-layer coextrusion inflation die by using a gear pump. Further, as the resin for the microporous layer (B), a resin material was acquired by mixing 92 weight% of a high-molecular-weight polypropylene resin [MFR (230°C) = 0.51 g/10 min, density = 0.91 g/cm$^3$] and 8 weight% of a styrene-ethylene-propylene-styrene block copolymer (referred to as "SEPS" in tables) by dry blending. The acquired resin material was melted by a 2.5-inch extruder and was supplied to the inner layer of the aforementioned two-material, three-layer coextrusion inflation die by using a gear pump. A precursor sheet having an A/B/A layer structure with a thickness of approximately 14 $\mu$m was acquired by setting the temperature of the inflation die to 245°C, extruding the melted polymer from the inflation die, and then winding the extruded resin onto a roll while cooling the resin with blown air. The distance between the lips (the lip clearance) of the inflation die was set to 1.8 mm; and extrusion was performed under an extrusion rate condition of 9 kg/h.

Next, the acquired precursor was introduced into a dryer, and an annealing treatment was performed at 150°C for 180 minutes. Subsequently, a separator substrate having a three-layer structure including A/B/A layers was acquired by performing 30% cold stretching on the annealed precursor at room temperature, introducing the stretched membrane into an oven at 140°C without causing contraction, performing hot stretching up to 180%, and then performing 50% relaxation. The structure and physical properties of the acquired separator substrate are described in Table 1.

<<Example 2>>

A microporous membrane was acquired in accordance with the same method as that in Example 1 except that the stretched membrane was introduced into an oven at 150°C and then underwent hot stretching and relaxation; and the acquired microporous membrane was evaluated as a separator.

<<Examples 3, 6, 7, and 8>>

A microporous membrane was acquired in accordance with the same method as that in Example 1 except for changing the raw materials as described in Table 1, performing 40% cold stretching, and performing 220% hot stretching and 30% relaxation in an oven at 135°C; and the acquired microporous membrane was evaluated as a separator.

<<Example 4>>

A microporous membrane was acquired in accordance with the same method as that in Example 1 except for changing the raw materials as described in Table 1, performing 20% cold stretching, and performing 190% hot stretching and 30% relaxation in an oven at 135°C; and the acquired microporous membrane was evaluated as a separator.

<<Example 5>>

A microporous membrane was acquired in accordance with the same method as that in Example 1 except for performing 16% cold stretching and 195% hot stretching; and the acquired microporous membrane was evaluated as a separator.

<<Example 9>>

As the resin for the microporous layer (A), 100 weight% of a high-molecular-weight polypropylene resin [MFR (230°C) = 0.91 g/10 min, density = 0.91 g/cm$^3$] was melted by a 2.5-inch extruder and was supplied to a single-layer inflation die by using a gear pump. A precursor sheet having a single-layer structure constituted of the microporous layer (A) with a thickness of approximately 12 $\mu$m was acquired by setting the temperature of the inflation die to 225°C, extruding the melted polymer from the inflation die, and then winding the extruded resin onto a roll while cooling the resin with blown air. The distance between the lips (the lip clearance) of the inflation die was set to 1.8 mm; and extrusion was performed under an extrusion rate condition of 9 kg/h.

Next, the acquired precursor sheet was introduced into a dryer, and an annealing treatment was performed at 150°C for 180 minutes. Subsequently, a separator substrate having a single-layer structure constituted of the microporous layer (A) was acquired by performing 30% cold stretching on the annealed precursor at room temperature, introducing the stretched membrane into an oven at 135°C without causing contraction, performing hot stretching up to 240%, and then performing 50% relaxation. The acquired separator substrate was evaluated.

<<Example 13>>

As the resin for the microporous layer (A), 100 weight% of a high-molecular-weight polypropylene resin [MFR (230°C) = 0.25 g/10 min, density = 0.91 g/cm$^3$] was melted by a 2.5-inch extruder and was supplied to the inner layer of a two-material, three-layer coextrusion inflation die at an extrusion rate of 7 kg/h by using a gear pump. Further, as the resin for the microporous layer (B), 100 weight% of a high molecular weight polypropylene resin [MFR (230°C) = 0.91 g/10 min, density = 0.91 g/cm$^3$] was melted by a 2.5-inch extruder and was supplied to both outer layers of the aforementioned two-material, three-layer coextrusion inflation die at an extrusion rate of 2 kg/h by using a gear pump. A precursor sheet having a B/A/B layer structure with a thickness of approximately 12 $\mu$m was acquired by setting the temperature of the inflation die to 225°C, extruding the melted polymer from the inflation die, and then winding the extruded resin onto a roll while cooling the resin with blown air. The distance between the lips (the lip clearance) of the inflation die was set to 1.8 mm; and extrusion was performed under an extrusion rate condition of 9 kg/h in total.

Next, the acquired precursor sheet was introduced into a dryer, and an annealing treatment was performed at 130°C for 180 minutes. Subsequently, a separator substrate having a three-layer structure including B/A/B layers was acquired by performing 30% cold stretching on the annealed precursor at room temperature, introducing the stretched membrane into an oven at 140°C without causing contraction, performing hot stretching up to 180%, and then performing 50% relaxation. The acquired separator was evaluated.

<<Examples 10, 11, and 15, Comparative Example 4>>

A separator substrate having a single-layer structure constituted of the microporous layer (A) was acquired in accordance with the same method as that in Example 9 except for changing the resin raw materials and the manufacturing conditions as described in Table 1. The acquired separator substrate was evaluated.

<<Example 12>>

A microporous membrane was acquired in accordance with the same method as that in Example 1 except for changing the resin for the microporous layer (A) as described in Table 1, changing the resin for the microporous layer (B) to 100 weight% of a polyethylene resin [MFR (190°C) = 0.32 g/10 min, density = 0.96 g/cm$^3$], setting the temperature of the inflation die to 225°C, performing 30% cold stretching, and performing hot stretching up to 200% and 40% relaxation in an oven at 120°C; and the acquired separator was evaluated.

<<Example 14>>

A microporous membrane was acquired in accordance with the same method as that in Example 4 except for performing 12% cold stretching, performing hot stretching up to 170%, and performing 40% relaxation; and the acquired separator was evaluated.

<<Comparative Example 1>>

A microporous membrane was acquired in accordance with the same method as that in Example 13 except for performing an annealing treatment at 150°C for 180 minutes, performing 10% cold stretching, performing hot stretching up to 150%, and performing 40% relaxation; and the acquired separator was evaluated.

<<Comparative Example 2>>

A separator substrate having a three-layer structure including B/A/B layers was acquired in accordance with the same method as that in Example 13 except for changing the resin raw materials and the manufacturing conditions as described in Table 1. The acquired separator was evaluated.

<<Comparative Example 3>>

A separator substrate having a three-layer structure including A/B/A layers was acquired in accordance with the same method as that in Example 12 except for changing the resin raw materials and the manufacturing conditions as described in Table 1. The acquired separator was evaluated.

Table 1 shows that, by strictly controlling the composition of each layer and strictly controlling the membrane formation conditions, the area-average pore diameter of the microporous layer (A) placed as the outermost layer and the trunk height of the separator substrate can be controlled to be small despite use of a polypropylene resin in each layer and that such a separator structure allows simultaneous achievement of high permeability required of a separator for a lithium-ion secondary battery, and high puncture strength and high dielectric strength for achieving a high level of safety.

[Table 1-1]

Table 1-1

| | | Example 1 | Example 2 | Example 3 | Example 4 | Example 5 | Example 6 | Example 7 | Example 8 |
|---|---|---|---|---|---|---|---|---|---|
| Separator substrate structure | | A/B/A | A/B/A | A/B/A | A/B/A | A/B/A | A/B/A | B/A/B | A/B/A |
| Microporous layer (A) | Composition | PP | PP | PP | PP | PP | PP | PP | PP |
| | Melt tension $Mt_A$ (mN, 240°C) | 30.6 | 30.6 | 21.4 | 26.1 | 30.6 | 30.6 | 35.9 | 30.6 |
| | MFR (g/10 min, 230°C) of microporous layer (A) | 0.31 | 0.31 | 0.51 | 0.38 | 0.31 | 0.31 | 0.25 | 0.31 |
| | Mw of PP | 940,000 | 940,000 | 810,000 | 850,000 | 940,000 | 940,000 | 910,000 | 940,000 |
| | MWD of PP | 7.2 | 7.2 | 4.6 | 5.3 | 7.2 | 7.2 | 4.3 | 7.2 |
| | Area-average major axis pore diameter (nm) | 151 | 186 | 151 | 235 | 240 | 144 | 232 | 156 |
| | Thickness (μm) | 4.2 | 3.9 | 3.9 | 4.2 | 4.2 | 4.2 | 7.7 | 4.0 |
| Microporous layer (B) | Composition | PP+ 8% SEPS | PP+ 8% SEPS | PP+ 8% SEPS | PP+ 8% SEPS | PP+ 8% SEPS | PP+ 8% SEPS | PP | PP+ 8% SEPS |
| | Melt tension $Mt_B$ (mN, 240°C) | 18.3 | 18.3 | 18.3 | 18.3 | 18.3 | 18.3 | 14.25 | 18.3 |
| | MFR (g/10 min, 230°C for principal component PP, 190°C for principal component PE) of microporous layer (B) | 0.60 | 0.60 | 0.60 | 0.60 | 0.60 | 0.60 | 0.91 | 0.60 |
| | Mw of PP | 810,000 | 810,000 | 810,000 | 810,000 | 810,000 | 810,000 | 690,000 | 810,000 |
| | MWD of PP | 4.6 | 4.6 | 4.6 | 4.6 | 4.6 | 4.6 | 4.9 | 4.6 |
| | Area-average major axis pore diameter (nm) | 290 | 357 | 153 | 319 | 395 | 198 | 255 | 295 |
| | Thickness (μm) | 4.2 | 3.9 | 3.9 | 4.3 | 4.3 | 4.2 | 1.1 | 4.0 |

EP 4 693 691 A1

(continued)

| | | Example 1 | Example 2 | Example 3 | Example 4 | Example 5 | Example 6 | Example 7 | Example 8 |
|---|---|---|---|---|---|---|---|---|---|
| Separator substrate structure | | A/B/A | A/B/A | A/B/A | A/B/A | A/B/A | A/B/A | B/A/B | A/B/A |
| Separator | Trunk height (nm) | 790 | 908 | 581 | 815 | 953 | 583 | 600 | 882 |
| | Thickness ($\mu$m) | 12.6 | 11.7 | 11.7 | 12.7 | 12.7 | 12.6 | 9.9 | 12.0 |
| | Porosity (%) | 49.9 | 43.9 | 52.4 | 52.1 | 48.2 | 55.0 | 50.2 | 46.0 |
| | TD thermal contraction (%) | 0.0 | 0.0 | -0.8 | 0.0 | 0.0 | 0.0 | 0.0 | 0.0 |
| | MD tensile strength (kgf/cm$^2$) | 1945 | 2160 | 2466 | 2048 | 1981 | 2143 | 2622 | 2102 |
| | Puncture strength (gf) | 286 | 317 | 310 | 266 | 265 | 247 | 259 | 244 |
| | Puncture strength (gf/10 $\mu$m) | 227 | 270 | 265 | 210 | 209 | 197 | 261 | 204 |
| | Air permeability (sec/100 cm$^3$) | 177 | 182 | 197 | 158 | 162 | 182 | 173 | 179 |
| | Air permeability [sec/(100 cm$^3 \cdot$10 $\mu$m)] | 141 | 155 | 169 | 125 | 128 | 145 | 175 | 149 |
| | Air permeability (sec/100 cm$^3$) after high-temperature treatment | 182 | 186 | 205 | 218 | 169 | 190 | 200 | 180 |
| | Dielectric strength (kV) | 1.35 | 1.40 | 1.36 | 1.35 | 1.34 | 1.32 | 1.24 | 1.34 |
| | Dielectric strength (kV/10 $\mu$m) | 1.07 | 1.20 | 1.17 | 1.07 | 1.06 | 1.05 | 1.25 | 1.12 |
| | Hot stretching ratio (%) | 181 | 181 | 223 | 191 | 195 | 223 | 220 | 181 |
| Manufacturing method | Annealing temperature (°C) | 150 | 150 | 150 | 150 | 150 | 150 | 150 | 150 |
| | Hot stretching temperature (°C) | 141 | 151 | 136 | 136 | 141 | 136 | 131 | 136 |
| | Cold stretching ratio (%) | 30 | 30 | 40 | 20 | 16 | 40 | 30 | 30 |
| | Thermal relaxation ratio (%) | -49 | -49 | -33 | -28 | -49 | -33 | -44 | 48 |

[Table 1-2]

Table 1-2

| | | Example 9 | Example 10 | Example 11 | Example 12 | Example 13 | Example 14 | Example 15 | Comparative Example 1 | Comparative Example 2 | Comparative Example 3 | Comparative Example 4 |
|---|---|---|---|---|---|---|---|---|---|---|---|---|
| Separator substrate structure | | A | A | A | A/B/A | B/A/B | A/B/A | A | B/A/B | B/A/B | A/B/A | A |
| Microporous layer (A) | Composition | PP | PP +8%C2C4 | PP +3%C2C3 +4%PE | PP | PP | PP | PP | PP | PP | PP | PP +3%C2C3 +4%PE |
| | Melt tension $Mt_A$ (mN, 240°C) | 14.3 | 21.4 | 20.8 | 14.3 | 35.9 | 26.1 | 14.25 | 35.9 | 35.85 | 14.3 | 20.8 |
| | MFR (g/10 min, 230°C) of microporous layer (A) | 0.91 | 0.51 | 0.53 | 0.91 | 0.25 | 0.38 | 0.91 | 0.25 | 0.25 | 0.91 | 0.53 |
| | Mw of PP | 690,000 | 810,000 | 810,000 | 690000 | 910000 | 850000 | 690000 | 910,000 | 910000 | 690,000 | 810000 |
| | MWD of PP | 4.9 | 4.6 | 4.6 | 4.9 | 4.3 | 5.3 | 4.9 | 4.3 | 4.3 | 4.9 | 4.6 |
| | Area-average major axis pore diameter (nm) | 169 | 266 | 179 | 168 | 114 | 296 | 306 | 218 | 176 | 228 | 185 |
| | Thickness (µm) | 9.5 | 10.8 | 8.9 | 3.6 | 6.4 | 4.5 | 9.3 | 8.3 | 4.1 | 3.7 | 8.6 |

(continued)

| | | Example 9 | Example 10 | Example 11 | Example 12 | Example 13 | Example 14 | Example 15 | Comparative Example 1 | Comparative Example 2 | Comparative Example 3 | Comparative Example 4 |
|---|---|---|---|---|---|---|---|---|---|---|---|---|
| Separator substrate structure | | A | A | A | A/B/A | B/A/B | A/B/A | A | B/A/B | B/A/B | A/B/A | A |
| Microporous layer (B) | Composition | - | - | - | PE | PP | PP+ 8% SEPS | - | PP | PP | PE | - |
| | Melt tension $Mt_B$ (mN, 240°C) | - | - | - | 22.2 | 14.25 | 18.3 | - | 14.25 | 14.25 | 22.2 | - |
| | MFR (g/10 min, 230°C for principal component PP, 190°C for principal component PE) of microporous layer (B) | - | - | - | 0.32 | 0.91 | 0.60 | - | 0.91 | 0.91 | 0.32 | - |
| | Mw of PP | - | - | - | - | 690,000 | 810,000 | - | 690,000 | 690000 | - | - |
| | MWD of PP | - | - | - | - | 4.9 | 4.6 | - | 4.9 | 4.9 | - | - |
| | Area-average major axis pore diameter (nm) | - | - | - | 948 | 151 | 323 | - | 249 | 268.92 | 1284 | - |
| | Thickness (μm) | - | - | - | 3.7 | 0.9 | 4.5 | - | 1.2 | 4.1 | 3.7 | - |
| Separator | Trunk height (nm) | 623 | 676 | 510 | 790 | 551 | 942 | 782 | 1175 | 1037 | 1734 | 463 |
| | Thickness (μm) | 9.5 | 10.8 | 8.9 | 10.9 | 8.2 | 13.5 | 9.3 | 10.7 | 12.3 | 11.1 | 8.6 |
| | Porosity (%) | 49.0 | 46.8 | 50.0 | 45.9 | 37.8 | 52.4 | 53.1 | 45.5 | 48.7 | 48.7 | 48.5 |

(continued)

| | | Example 9 | Example 10 | Example 11 | Example 12 | Example 13 | Example 14 | Example 15 | Comparative Example 1 | Comparative Example 2 | Comparative Example 3 | Comparative Example 4 |
|---|---|---|---|---|---|---|---|---|---|---|---|---|
| Separator substrate structure | | A | A | A | A/B/A | B/A/B | A/B/A | A | B/A/B | B/A/B | A/B/A | A |
| | TD thermal contraction (%) | 0.0 | 0.0 | 0.0 | -1.3 | 0.0 | -0.8 | 0.0 | 0.0 | -0.4 | -0.8 | 0.0 |
| | MD tensile strength (kgf/cm$^2$) | 2175 | 2262 | 2428 | 1809 | 3325 | 1792 | 2268 | 2213 | 1862 | 1608 | 2521 |
| | Puncture strength (gf) | 200 | 293 | 334 | 209 | 423 | 326 | 180 | 248 | 238 | 198 | 340 |
| | Puncture strength (gf/10 $\mu$m) | 211 | 271 | 375 | 191 | 516 | 242 | 194 | 231 | 194 | 178 | 395 |
| | Air permeability (sec/100 cm$^3$) | 140 | 136 | 163 | 185 | 286 | 147 | 99 | 139 | 148 | 345 | 190 |
| | Air permeability [sec/(100 cm$^3$·10 $\mu$m)] | 147 | 126 | 183 | 169 | 349 | 109 | 107 | 130 | 120 | 309 | 221 |
| | Air permeability (sec/100 cm$^3$) after high-temperature treatment | 172 | 150 | 220 | >1000 | 380 | 154 | 135 | 160 | 145 | >1000 | 240 |
| | Dielectric strength (kV) | 1.01 | 1.16 | 0.94 | 1.09 | 1.12 | 1.07 | 0.91 | 1.01 | 1.17 | 0.81 | 1.03 |
| | Dielectric strength (kV/10 $\mu$m) | 1.06 | 1.08 | 1.06 | 1.00 | 1.37 | 0.80 | 0.98 | 0.95 | 0.95 | 0.73 | 1.20 |

(continued)

| | | Example 9 | Example 10 | Example 11 | Example 12 | Example 13 | Example 14 | Example 15 | Comparative Example 1 | Comparative Example 2 | Comparative Example 3 | Comparative Example 4 |
|---|---|---|---|---|---|---|---|---|---|---|---|---|
| Separator substrate structure | | A | A | A | A/B/A | B/A/B | A/B/A | A | B/A/B | B/A/B | A/B/A | A |
| Manufacturing method | Hot stretching ratio (%) | 241 | 200 | 240 | 201 | 220 | 178 | 281 | 153 | 167 | 190 | 260 |
| | Annealing temperature (°C) | 150 | 150 | 150 | 130 | 130 | 150 | 150 | 150 | 150 | 130 | 150 |
| | Hot stretching temperature (°C) | 136 | 136 | 136 | 121 | 136 | 136 | 131 | 136 | 136 | 121 | 136 |
| | Cold stretching ratio (%) | 30 | 30 | 40 | 30 | 40 | 12 | 10 | 10 | 20 | 20 | 40 |
| | Thermal relaxation ratio (%) | -59 | -44 | -44 | -40 | -49 | -26 | -43 | -41 | -45 | -40 | -33 |

<<Example 16>>

[Production of Microporous Layer]

As the resin for the microporous layer (A), 100 weight% of a high-molecular-weight polypropylene resin [MFR (230°C) = 0.30 g/10 min, density = 0.91 g/cm$^3$] was melted by a 2.5-inch extruder and was supplied to both outer layers of a two-material, three-layer coextrusion inflation die by using a gear pump. Further, as the resin for the microporous layer (B), a high-molecular-weight polypropylene resin [MFR (230°C) = 0.51 g/10 min, density = 0.91 g/cm$^3$] was melted by a 2.5-inch extruder and was supplied to the inner layer of the aforementioned two-material, three-layer coextrusion inflation die by using a gear pump. A precursor sheet having an A/B/A layer structure with a thickness of approximately 14 μm was acquired by setting the temperature of the inflation die to 245°C, extruding the melted polymer from the inflation die, and then winding the extruded resin onto a roll while cooling the resin with blown air. The distance between the lips (the lip clearance) of the inflation die was set to 1.8 mm; and extrusion was performed under an extrusion rate condition of 9 kg/h.

Next, the acquired precursor was introduced into a dryer, and an annealing treatment was performed at 150°C for 180 minutes. Subsequently, a separator substrate having a three-layer structure including A/B/A layers was acquired by performing 30% cold stretching on the annealed precursor at room temperature, introducing the stretched membrane into an oven at 140°C without causing contraction, performing hot stretching up to 180%, and then performing 50% relaxation. The structure, physical properties, and battery performance evaluation results of the acquired separator substrate are described in Table 2.

<<Examples 17 to 19 and 22 to 24>>

A microporous membrane was acquired in accordance with the same method as that in Example 16 except for changing the raw materials as described in Table 2, and the acquired separator was evaluated.

<<Examples 20 and 21>>

As the resin for the microporous layer (B), a resin material was acquired by mixing 92 weight% of a high-molecular-weight polypropylene resin [MFR (230°C) = 0.51 g/10 min, density = 0.91 g/cm$^3$] and 8 weight% of a styrene-ethylene-propylene-styrene block copolymer (referred to as "SEPS" in the table) by dry blending. The acquired resin material was melted by a 2.5-inch extruder and was supplied to the inner layer of a two-material, three-layer coextrusion inflation die by using a gear pump. Further, as the resin for the microporous layer (A), a high-molecular-weight polypropylene resin [MFR (230°C) = 0.30 g/10 min in Example 20, MFR (230°C) = 0.50 g/10 min in Example 21, density = 0.91 g/cm$^3$ in Examples 20 and 21] was melted by a 2.5-inch extruder and was supplied to both outer layers of the aforementioned two-material, three-layer coextrusion inflation die by using a gear pump. A precursor sheet having an A/B/A layer structure with a thickness of approximately 14 μm was acquired by setting the temperature of the inflation die to 245°C, extruding the melted polymer from the inflation die, and then winding the extruded resin onto a roll while cooling the resin with blown air. The distance between the lips (the lip clearance) of the inflation die was set to 1.8 mm; and extrusion was performed under an extrusion rate condition of 9 kg/h.

<<Example 25>>

A precursor sheet was acquired by using the same raw materials and the same manufacturing method as those in Example 16 as described in Table 2.

Next, the acquired precursor sheet was introduced into a dryer, and an annealing treatment was performed at 150°C for 180 minutes. Subsequently, a separator substrate having a three-layer structure including A/B/A layers was acquired by performing 40% cold stretching on the annealed precursor at room temperature, introducing the stretched membrane into an oven at 140°C without causing contraction, performing hot stretching up to 180%, and then performing 50% relaxation. The structure, physical properties, and battery performance evaluation results of the acquired separator substrate are described in Table 2.

Table 2 shows that, by strictly controlling the composition of each layer and strictly controlling the membrane formation conditions, the area-average pore diameter of the microporous layer (A) placed as the outermost layer can be controlled to be smaller than the area-average pore diameter of the microporous layer (B) despite use of a polypropylene resin in each layer and that such a separator structure allows excellent suppression of dendrite short circuiting in a lithium-ion secondary battery and also allows excellence in dielectric strength and permeability.

[Table 2-1]

Table 2-1

| | | Example 16 | Example 17 | Example 18 | Example 19 | Example 20 |
|---|---|---|---|---|---|---|
| Separator substrate structure | | (A)/(B)/(A) | (A)/(B)/(A) | (A)/(B)/(A) | (A)/(B)/(A) | (A)/(B)/(A) |
| Microporous layer (A) | Composition | PP | PP | PP | PP | PP |
| | Melt tension (Mt$_A$) (mN, 240°C) | 30.6 | 27.3 | 30.6 | 27.3 | 30.6 |
| | MFR (g/10 min, 230°C) of microporous layer (A) | 0.30 | 0.50 | 0.30 | 0.50 | 0.30 |
| | Mw of PP | 940000 | 840000 | 940000 | 840000 | 940000 |
| | MWD of PP | 7.2 | 6.7 | 7.2 | 6.7 | 7.2 |
| | Ratio of molecular weight ≤ 80,000 | 12.7% | 12.8% | 12.7% | 12.8% | 12.7% |
| | Ratio of molecular weight ≥ 1,500,000 | 14.6% | 13.3% | 14.6% | 13.3% | 14.6% |
| | Thickness (μm) | 4.1 | 4.0 | 4.2 | 4.0 | 4.0 |
| | Total thickness (μm) | 8.1 | 8.0 | 8.5 | 8.0 | 8.0 |
| | Area-average major axis pore diameter (nm) | 145 | 153 | 151 | 162 | 156 |
| Microporous layer (B) | Composition | PP | PP | PP | PP | PP+8%SEPS |
| | Melt tension (Mtg) (mN, 240°C) | 21.4 | 21.4 | 14.3 | 14.3 | 18.3 |
| | MFR (g/10 min, 230°C) of microporous layer (B) | 0.51 | 0.51 | 0.91 | 0.91 | 0.60 |
| | Mw of PP | 810000 | 810000 | 690000 | 690000 | 810000 |
| | MWD of PP | 4.3 | 4.3 | 5.4 | 5.4 | 4.3 |
| | Ratio of molecular weight ≤ 80,000 | 9.7% | 9.7% | 13.8% | 13.8% | 9.7% |
| | Ratio of molecular weight ≥ 1,500,000 | 11.6% | 11.6% | 9.0% | 9.0% | 11.6% |
| | Thickness (μm) | 4.1 | 4.0 | 4.2 | 4.0 | 4.0 |
| | Total thickness (μm) | 4.1 | 4.0 | 4.2 | 4.0 | 4.0 |
| | Area-average major axis pore diameter (nm) | 261 | 268 | 291 | 296 | 315 |
| Relation between microporous layers (A) and (B) | Mt$_A$/Mt$_B$ | 1.43 | 1.28 | 2.14 | 1.91 | 1.67 |
| | Pore diameter ratio (B) layer/(A) layer | 1.80 | 1.75 | 1.93 | 1.83 | 2.02 |

(continued)

| | | Example 16 | Example 17 | Example 18 | Example 19 | Example 20 |
|---|---|---|---|---|---|---|
| Separator substrate structure | | (A)/(B)/(A) | (A)/(B)/(A) | (A)/(B)/(A) | (A)/(B)/(A) | (A)/(B)/(A) |
| Separator | Thickness ($\mu$m) | 12.2 | 12.1 | 12.7 | 12.0 | 12.0 |
| | Porosity | 55% | 54% | 49% | 52% | 46% |
| | Air permeability (sec/100 cm$^3$) | 165 | 160 | 153 | 146 | 135 |
| | Air permeability [sec/(100 cm$^3\cdot$10 $\mu$m)] | 135 | 133 | 120 | 122 | 113 |
| | TD thermal contraction | 0.0% | 0.2% | 0.1% | 0.0% | 0.1% |
| | Puncture strength (gf) | 250 | 291 | 279 | 275 | 244 |
| | Puncture strength (gf/10 $\mu$m) | 205 | 241 | 220 | 229 | 203 |
| | Dielectric strength (kV) | 1.41 | 1.38 | 1.43 | 1.35 | 1.30 |
| | Dielectric strength (kV/10 $\mu$m) | 1.16 | 1.14 | 1.13 | 1.13 | 1.09 |
| | Length-average trunk height (nm) | 616 | 646 | 756 | 781 | 882 |
| Battery performance | Dendrite short circuiting evaluation (pass %) | 90% | 80% | 100% | 100% | 90% |

[Table 2-2]

Table 2-2

| | | Example 21 | Example 22 | Example 23 | Example 24 | Example 25 |
|---|---|---|---|---|---|---|
| Separator substrate structure | | (A)/(B)/(A) | (A)/(B)/(A) | (A)/(B)/(A) | (A)/(B)/(A) | (A)/(B)/(A) |
| Microporous layer (A) | Composition | PP | PP | PP | PP | PP |
| | Melt tension (Mt$_A$) (mN, 240°C) | 27.3 | 35.9 | 25.2 | 21.4 | 30.6 |
| | MFR (g/10 min, 230°C) of microporous layer (A) | 0.50 | 0.30 | 0.44 | 0.51 | 0.30 |
| | Mw of PP | 840000 | 910000 | 850000 | 810000 | 940000 |
| | MWD of PP | 6.7 | 5.5 | 4.9 | 4.3 | 7.2 |
| | Ratio of molecular weight ≤ 80,000 | 12.8% | 7.6% | 9.9% | 9.7% | 12.7% |
| | Ratio of molecular weight ≥ 1,500,000 | 13.3% | 15.0% | 13.3% | 11.6% | 14.6% |
| | Thickness (μm) | 4.3 | 4.3 | 4.2 | 4.3 | 4.2 |
| | Total thickness (μm) | 8.6 | 8.5 | 8.3 | 8.6 | 8.4 |
| | Area-average major axis pore diameter (nm) | 160 | 165 | 178 | 171 | 144 |
| Microporous layer (B) | Composition | PP+8%SEPS | PP | PP | PP | PP |
| | Melt tension (Mtg) (mN, 240°C) | 18.3 | 21.4 | 21.4 | 21.4 | 21.4 |
| | MFR (g/10 min, 230°C) of microporous layer (B) | 0.60 | 0.51 | 0.51 | 0.51 | 0.51 |
| | Mw of PP | 810000 | 810000 | 810000 | 810000 | 810000 |
| | MWD of PP | 4.3 | 4.3 | 4.3 | 4.3 | 4.3 |
| | Ratio of molecular weight ≤ 80,000 | 9.7% | 9.7% | 9.7% | 9.7% | 9.7% |
| | Ratio of molecular weight ≥ 1,500,000 | 11.6% | 11.6% | 11.6% | 11.6% | 11.6% |
| | Thickness (μm) | 4.3 | 4.3 | 4.2 | 4.3 | 4.2 |
| | Total thickness (μm) | 4.3 | 4.3 | 4.2 | 4.3 | 4.2 |
| | Area-average major axis pore diameter (nm) | 307 | 282 | 267 | 176 | 208 |
| Relation between microporous layers (A) and (B) | Mt$_A$/Mt$_B$ | 1.49 | 1.68 | 1.18 | 1.00 | 1.43 |
| | Pore diameter ratio (B) layer/(A) layer | 1.92 | 1.71 | 1.50 | 1.03 | 1.44 |

(continued)

| | | Example 21 | Example 22 | Example 23 | Example 24 | Example 25 |
|---|---|---|---|---|---|---|
| Separator substrate structure | | (A)/(B)/(A) | (A)/(B)/(A) | (A)/(B)/(A) | (A)/(B)/(A) | (A)/(B)/(A) |
| Separator | Thickness ($\mu$m) | 12.9 | 12.8 | 12.5 | 12.9 | 12.6 |
| | Porosity | 49% | 46% | 52% | 53% | 55% |
| | Air permeability (sec/100 cm$^3$) | 152 | 225 | 218 | 203 | 242 |
| | Air permeability [sec/(100 cm$^3\cdot$10 $\mu$m)] | 118 | 176 | 174 | 157 | 192 |
| | TD thermal contraction | 0.2% | 0.2% | 0.1% | 0.2% | 0.2% |
| | Puncture strength (gf) | 272 | 353 | 260 | 311 | 257 |
| | Puncture strength (gf/10 $\mu$m) | 211 | 276 | 208 | 241 | 204 |
| | Dielectric strength (kV) | 1.42 | 1.48 | 1.43 | 1.44 | 1.47 |
| | Dielectric strength (kV/10 $\mu$m) | 1.10 | 1.16 | 1.14 | 1.12 | 1.17 |
| | Length-average trunk height (nm) | 853 | 745 | 660 | 683 | 560 |
| Battery performance | Dendrite short circuiting evaluation (pass %) | 90% | 70% | 60% | 40% | 70% |

<<Examples 26 to 29>>

A separator substrate having a three-layer structure including B/A/B layers was acquired in accordance with the same method as that in Example 13 except for changing the resin raw materials and the manufacturing conditions as described in Table 3. The acquired separator was evaluated.

Table 3 shows that, by strictly controlling the membrane formation conditions, the area-average pore diameter on the surface of the microporous layer can be controlled to be high and the average flow pore diameter can be controlled to be low despite use of a polypropylene resin in each layer. Table 3 further shows that a separator having such a structure has high permeability required of a separator for a lithium-ion secondary battery and can simultaneously achieve high dielectric strength and high strength for achieving a high level of safety.

[Table 3]

Table 3

| | | Example 26 | Example 27 | Example 28 | Example 29 |
|---|---|---|---|---|---|
| Separator substrate structure | | (B)/(A)/(B) | (B)/(A)/(B) | (B)/(A)/(B) | (B)/(A)/(B) |
| Microporous layer (A) | Composition | PP | PP | PP | PP |
| | Melt tension (Mt$_A$) (mN, 240°C) | 30.6 | 30.6 | 35.85 | 14.3 |
| | MFR (g/10 min, 230°C) | 0.30 | 0.30 | 0.25 | 0.90 |
| | Mw of PP | 940000 | 940000 | 910000 | 690000 |
| | MWD of PP | 7.2 | 7.2 | 4.3 | 5.4 |
| | Area-average major axis pore diameter (nm) | 172 | 137 | 121 | 166 |

(continued)

| | | Example 26 | Example 27 | Example 28 | Example 29 |
|---|---|---|---|---|---|
| Separator substrate structure | | (B)/(A)/(B) | (B)/(A)/(B) | (B)/(A)/(B) | (B)/(A)/(B) |
| Microporous layer (B) | Composition | PP | PP | PP | PP |
| | Melt tension ($Mt_B$) (mN, 240°C) | 21.4 | 21.4 | 14.3 | 14.3 |
| | MFR (g/10 min, 230°C) | 0.50 | 0.50 | 0.90 | 0.90 |
| | Mw of PP | 810000 | 810000 | 690000 | 690000 |
| | MWD of PP | 4.3 | 4.3 | 5.4 | 5.4 |
| | Area-average major axis pore diameter (nm) | 238 | 165 | 153 | 175 |
| Relation between microporous layers (A) and (B) | MtA/MtB | 1.43 | 1.43 | 2.51 | 1.00 |
| | Layer ratio | 1/1/1 | 1/7/1 | 1/7/1 | 1/1/1 |
| Separator | Thickness ($\mu$m) | 10.8 | 10.4 | 10.3 | 9.0 |
| | Porosity | 48% | 45% | 48% | 50% |
| | Area-average major axis pore diameter on surface (nm) | 232 | 165 | 153 | 166 |
| | Average flow pore diameter (nm) | 23 | 21 | 19 | 27 |
| | Length-average trunk height (nm) | 693 | 712 | 733 | 668 |
| | Air permeability (sec/100 cm$^3$) | 186 | 190 | 204 | 130 |
| | Air permeability (sec/100 cm$^3$·10 $\mu$m) | 172 | 183 | 199 | 144 |
| | MD tensile strength (kgf/cm$^2$) | 2335 | 2252 | 2254 | 2114 |
| | TD tensile strength (kgf/cm$^2$) | 101 | 109 | 101 | 98 |
| | TD thermal contraction | 0.0% | 0.0% | 0.0% | 0.0% |
| | Dielectric strength (kV) | 1.23 | 1.37 | 1.31 | 0.91 |
| | Dielectric strength (kV/10 $\mu$m) | 1.14 | 1.32 | 1.28 | 1.01 |
| Manufacturing method | Outer-layer extruder temperature (°C) | 230 | 215 | 215 | 215 |
| | Inner-laver extruder temperature (°C) | 220 | 210 | 210 | 205 |
| | Die temperature (°C) | 245 | 225 | 225 | 225 |
| | Airflow volume (m$^3$/min) | 4.3 | 2.9 | 2.9 | 3.5 |
| | Cold stretching ratio (%) | 30 | 30 | 30 | 30 |
| | Hot stretching ratio (%) | 240 | 180 | 180 | 219.7 |
| | Hot stretching temperature (°C) | 135 | 130 | 130 | 130 |

INDUSTRIAL APPLICABILITY

The separator for a power storage device according to the present disclosure can be suitably used as a separator for a power storage device such as a lithium-ion secondary battery.

**Claims**

1. A separator for a power storage device comprising a microporous membrane in which a microporous layer (A) containing polypropylene as a principal component and a microporous layer (B) containing polypropylene as a principal component are laminated or at least one of the microporous layer (A) and the microporous layer (B) is included, wherein
a trunk height calculated from an analysis of an SEM image of an MD-ND cross section of the microporous membrane is 500 nm or greater and 1000 nm or less.

2. The separator for a power storage device according to claim 1, wherein an area-average major axis pore diameter of the microporous layer (A) calculated from the analysis of the SEM image of the MD-ND cross section of the microporous membrane is 100 nm or greater and 280 nm or less.

3. The separator for a power storage device according to claim 1 or 2, wherein an area-average major axis pore diameter of the microporous layer (A) is smaller than an area-average major axis pore diameter of the microporous layer (B).

4. The separator for a power storage device according to claim 1 or 2, wherein melt tension $Mt_A$ of the microporous layer (A) at 240°C is 10 mN or greater and 35 mN or less.

5. The separator for a power storage device according to claim 1 or 2, wherein a thickness of the microporous membrane is 8 μm or greater and 20 μm or less.

6. The separator for a power storage device according to claim 1 or 2, wherein a thickness of the microporous layer (A) is 5 μm or less.

7. The separator for a power storage device according to claim 1 or 2, wherein a molecular weight distribution (Mw/Mn) being a value acquired by dividing a weight-average molecular weight (Mw) of polypropylene in the microporous layer (A) by a number-average molecular weight (Mn) of polypropylene in the microporous layer (A) is 6.0 or greater and 14 or less.

8. The separator for a power storage device according to claim 1 or 2, wherein a ratio of one or more components with a molecular weight equal to or less than 80,000 in polypropylene in the microporous layer (A) is 10% or greater and 20% or less, and a ratio of one or more components with a molecular weight equal to or greater than 1,500,000 is 10% or greater and 20% or less.

9. The separator for a power storage device according to claim 1 or 2, wherein an average flow pore diameter of the microporous layer (B) is 20 nm or greater and 25 nm or less.

10. The separator for a power storage device according to claim 1 or 2, wherein an area-average major axis pore diameter of a surface of the microporous layer (B) is 140 nm or greater and 300 nm or less.

11. The separator for a power storage device according to claim 1 or 2, wherein a TD thermal contraction rate of the microporous membrane at 105°C for 1 hour is 5% or less.

12. The separator for a power storage device according to claim 1 or 2, wherein porosity of the microporous membrane is 40% or greater and 54% or less.

13. The separator for a power storage device according to claim 1 or 2, wherein melt tension $Mt_A$ of the microporous layer (A) at 240°C and melt tension $Mt_B$ of the microporous layer (B) are different in the microporous membrane.

14. The separator for a power storage device according to claim 1 or 2, wherein MD tensile strength of the microporous membrane is 1500 kgf/cm$^2$ or greater.

## INTERNATIONAL SEARCH REPORT

| International application No. |
|---|
| **PCT/JP2024/011678** |

### A. CLASSIFICATION OF SUBJECT MATTER

*H01M 50/489*(2021.01)i; *H01G 11/06*(2013.01)i; *H01G 11/52*(2013.01)i; *H01M 4/58*(2010.01)i; *H01M 50/403*(2021.01)i; *H01M 50/417*(2021.01)i; *H01M 50/449*(2021.01)i; *H01M 50/463*(2021.01)i; *H01M 50/491*(2021.01)i; *H01M 50/494*(2021.01)i

FI: H01M50/489; H01M50/417; H01M50/449; H01M50/463 A; H01M4/58; H01G11/06; H01G11/52; H01M50/491; H01M50/494; H01M50/403 B; H01M50/403 Z

According to International Patent Classification (IPC) or to both national classification and IPC

### B. FIELDS SEARCHED

Minimum documentation searched (classification system followed by classification symbols)

H01M50/489; H01G11/06; H01G11/52; H01M4/58; H01M50/403; H01M50/417; H01M50/449; H01M50/463; H01M50/491; H01M50/494

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-51521 A (ASAHI KASEI KABUSHIKI KAISHA) 31 March 2022 (2022-03-31) | 1-14 |
| A | JP 2022-142698 A (ASAHI KASEI KABUSHIKI KAISHA) 30 September 2022 (2022-09-30) | 1-14 |
| A | JP 2022-146342 A (ASAHI KASEI KABUSHIKI KAISHA) 05 October 2022 (2022-10-05) | 1-14 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 May 2024** | **11 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/011678**

| Patent document cited in search report | | | Publication date (day/month/year) | Patent family member(s) | | | Publication date (day/month/year) |
|---|---|---|---|---|---|---|---|
| JP | 2022-51521 | A | 31 March 2022 | US | 2023/0282933 | A1 | |
| | | | | WO | 2022/059744 | A1 | |
| | | | | EP | 4216248 | A1 | |
| | | | | KR | 10-2022-0162781 | A | |
| | | | | CN | 115885359 | A | |
| JP | 2022-142698 | A | 30 September 2022 | WO | 2022/197595 | A1 | |
| | | | | KR | 10-2023-0157451 | A | |
| | | | | CN | 117242635 | A | |
| JP | 2022-146342 | A | 05 October 2022 | (Family: none) | | | |

Form PCT/ISA/210 (patent family annex) (July 2022)

**EP 4 693 691 A1**

**Patent documents cited in the description**

- WO 2018089748 A
- WO 2020196120 A
- WO 2013069146 A